# EUROPEAN PATENT APPLICATION

(11) **EP 4 525 177 A1**
(43) Date of publication of application: **19.03.2025**
(21) Application number: 22947579.3
(22) Date of filing: 15.08.2022
(51) Int. Cl.: H01M 50/40

(54) **SEPARATOR AND PREPARATION METHOD THEREFOR, AND SECONDARY BATTERY AND ELECTRIC DEVICE RELATED THERETO**

(30) Priority: 24.06.2022 WO PCT/CN2022/101261
(71) Applicant: CONTEMPORARY AMPEREX TECHNOLOGY (HONG KONG) LIMITED, Hong Kong (HK)
(72) Inventor: XIAO, Zhiwei, Ningde, Fujian 352100 (CN); YANG, Jianrui, Ningde, Fujian 352100 (CN); XU, Ming, Ningde, Fujian 352100 (CN); WEI, Manxiang, Ningde, Fujian 352100 (CN)
(74) Representative: Gong, Jinping
(86) International application number: PCT/CN2022/112583
(87) International publication number: WO 2023/245838

(57) **Abstract**

The present application provides a separator, a method for preparing the same, a secondary battery and an electrical device related thereto. The separator includes a porous substrate and a coating layer disposed on one or more surfaces of the porous substrate, wherein the coating layer includes nanocellulose, and the porous substrate has a surface tension of δ1 mN/m, the coating layer has a surface tension of δ2 mN/m, and the separator satisfies δ1/δ2 ≥ 0.68. The separator provided in the present application has the characteristics of excellent heat resistance and high bonding strength, thus the secondary battery using the separator can have the combined characteristics of high energy density, high thermal safety performance, and long service life.

## Description

### CROSS-REFERENCE TO RELATED APPLICATION

This application claims priority to PCT Patent application PCT/CN2022/101261 entitled "SEPARATOR, METHOD FOR PREPARING THE SAME AND SECONDARY BATTERY AND ELECTRICAL DEVICE RELATED THERETO" and filed on June 24, 2022, which is incorporated herein by reference in its entirety.

### TECHNICAL FIELD

The present application belongs to the field of battery technology, and in particular relates to a separator, a method for preparing the same, and a secondary battery and an electrical device related thereto.

### BACKGROUND

In recent years, secondary batteries have been widely used in energy storage power systems such as hydraulic, thermal, wind and solar power plants, as well as in many fields such as electric tools, electric bicycles, electric motorcycles, electric vehicles, military equipment, and aerospace. With the application and promotion of secondary batteries, their safety issues, especially thermal safety issues, have received more and more attention. Separator is one of the main components that affect the safety performance of secondary batteries. How to provide a separator with excellent heat resistance and stable structure is still a key challenge in this field.

### SUMMARY

An object of the present application is to provide a separator, a method for preparing the same and a secondary battery and an electrical device related thereto, wherein the separator has the characteristics of excellent heat resistance and high bonding strength, so that a secondary battery using the separator can have the combined characteristics of high energy density, high thermal safety performance, and long service life.

A first aspect of the present application provides a separator, including a porous substrate and a coating layer disposed on one or more surfaces of the porous substrate, wherein the coating layer includes nanocellulose, and the porous substrate has a surface tension of δ1 mN/m, the coating layer has a surface tension of δ2 mN/m, and the separator satisfies δ1/δ2 ≥ 0.68.

The inventors of the present application have surprisingly found in the course of their studies that, by controlling the surface tension δ1 mN/m of the porous substrate and the surface tension δ2 mN/m of the coating layer to satisfy δ1/δ2 ≥ 0.68, high bonding strength between the porous substrate and the coating layer can be achieved, thereby avoiding the problem of falling off of coating layer during long-term charge and discharge of the secondary battery; meanwhile, it can also avoid the problem of missing coating (also known as "holiday" in coating filed) during the application of the coating slurry, thus the coating layer further has the characteristics of high uniformity and high coverage on the porous substrate, thereby allowing the separator to have excellent heat resistance. Therefore, the separator provided in the present application has the characteristics of excellent heat resistance and high bonding strength, thus the secondary battery using the separator can have the combined characteristics of high energy density, high thermal safety performance, and long service life.

In some embodiments of the present application, 0.68 ≤ δ1/ δ2 ≤ 1.8, optionally, 0.7 ≤ δ1/ δ2 ≤ 1.2. As a result, the separator may have the combined characteristics of excellent heat resistance and high bonding strength and good ion transport characteristics, thereby enabling the the secondary battery using the separator to better have the combined characteristics of high energy density, high thermal safety performance, and long service life.

In some embodiments of the present application, δ1 ≥ 23, optionally, 23 ≤ δ1 ≤ 45. When the surface tension of the porous substrate is within the suitable ranges, missing coating does not easily occur during the application of the coating slurry, and the coverage area on the porous substrate is relatively large, thereby enabling the separator to have more excellent heat resistance and the secondary battery to have better safety performance; meanwhile, it further facilitates maintaining the bonding strength between the porous substrate and the coating layer in a relatively high range.

In some embodiments of the present application, 25 ≤ δ2 ≤ 50, optionally, 30 ≤ δ2 ≤ 45. When the surface tension of the coating layer is within the suitable ranges, it is beneficial to maintaining the bonding strength between the porous substrate and the coating layer in a relatively high range; meanwhile, it is also beneficial to the infiltration of the electrolyte into the separator, thereby improving the ion transport characteristics of the separator and improving the capacity exertion characteristics of the secondary battery.

In some embodiments of the present application, the nanocellulose includes one or more of unmodified nanocellulose and modified nanocellulose, and optionally is modified nanocellulose.

In some embodiments of the present application, the modified nanocellulose includes a modifying group, and the modifying group comprises one or more of an amino group, a carboxylic acid group, an aldehyde group, a sulfonic acid group, a boric acid group, and a phosphoric acid group, and optionally comprises one or more of a sulfonic acid group, a boric acid group, and a phosphoric acid group. When the nanocellulose has the above-mentioned specific modifying group, on one hand, it can effectively improve the heat resistance of the separator, and improve the thermal safety performance of the secondary battery; on the other hand, it further facilitates maintaining the bonding strength between the porous substrate and the coating layer in a relatively high range.

In some embodiments of the present application, the modified nanocellulose includes a hydroxyl group and a modifying group, and a molar ratio of the modifying group to the hydroxyl group is from 1:4 to 4:1, optionally from 2:3 to 7:3. When the molar ratio of the modifying group to the hydroxyl group is in the appropriate ranges, the heat resistance and ion transport characteristics of the separator can be further improved, and the separator can further have high bonding strength.

In some embodiments of the present application, the nanocellulose has an average diameter of ≤ 40 nm, optionally from 10 nm to 35 nm. When the average diameter of the nanocellulose is in the appropriate ranges, the heat resistance of the separator can be further improved and the thermal shrinkage rate of the separator can be reduced.

In some embodiments of the present application, the nanocellulose has an average length of from 100 nm to 600 nm, optionally from 200 nm to 500 nm. When the average length of the nanocellulose is in the appropriate ranges, the heat resistance and ion transport properties of the separator may be further improved.

In some embodiments of the present application, the nanocellulose has an aspect ratio of from 5 to 60, optionally from 15 to 30. When the aspect ratio of the nanocellulose is in the appropriate ranges, the ion transport characteristics of the separator can be further improved.

In some embodiments of the present application, the nanocellulose in the coating layer is present in an amount of ≥ 8 wt.%, optionally from 10 wt.% to 25 wt.%, based on the total weight of the coating layer.

When the amount of nanocellulose is in the appropriate ranges, it can ensure that the coating slurry has an appropriate viscosity, which is more conducive to coating process and further enables to maintain high bonding strength between the coating layer and the porous substrate and improve the structural stability of the separator; in addition, it is also conducive to overlap between the nanocellulose and other components (such as a filler) to form a stable spatial network structure, thus can further improve the performance of the separator.

In some embodiments of the present application, the coating layer further includes a filler, the filler includes one or more selected from inorganic particles and organic particles.

In some embodiments of the present application, the filler in the coating layer is present in an amount of ≥ 60 wt.%, optionally from 65 wt.% to 90 wt.%, based on the total weight of the coating layer.

In some embodiments of the present application, the filler includes primary particles, secondary particles, and the combination thereof, and optionally the filler at least includes secondary particles.

The filler with secondary particle morphology has a relatively small particle size and relatively high specific surface area and better affinity with nanocellulose, and meanwhile the nanocellulose may overlap (make contact) in the gaps between the primary particles for forming the filler with secondary particle morphology, so that the nanocellulose and the filler with secondary particle morphology overlap to form an integrated effect, and the resulting coating layer may have a more stable spatial network structure, thereby further improving the performance of the separator.

The filler with primary particle morphology has a relatively large particle size and relatively high strength, thus can better exert its supporting role in the coating layer and reduce the amount of binder and reduce the heat shrinkage of the separator and improve the heat resistance of the separator; in addition, it also helps the coating layer to have more pore/channel structure and less moisture content when the filler is present in a relatively low amount, thereby further improving the ion transport characteristics and the electrolyte infiltration characteristics of the separator.

In some embodiments of the present application, the filler with primary particle morphology has an average particle size Dv50 of from 100 nm to 800 nm, optionally from 200 nm to 400 nm.

In some embodiments of the present application, the filler with secondary particle morphology have an average particle size Dv50 of ≤ 200 nm, optionally from 50 nm to 200 nm.

In some embodiments of the present application, the filler includes inorganic particles with primary particle morphology, inorganic particles with secondary particle morphology, and the combination thereof, and optionally the filler at least includes inorganic particles with secondary particle morphology.

In some embodiments of the present application, the inorganic particles with primary particle morphology have a crystal form including one or more of α crystal form and γ crystal form, and optionally have a crystal form including α crystal form.

In some embodiments of the present application, the inorganic particles with secondary particle morphology have a crystal form including two or more of α crystal form, θ crystal form, γ crystal form and η crystal form, optionally have a crystal form including two or more of α crystal form, θ crystal form, and γ crystal form.

In some embodiments of the present application, the coating layer further includes a non-granular binder, and optionally, the non-granular binder includes an aqueous solution-type binder. As a result, this facilitates the preparation and coating processes of the coating slurry.

In some embodiments of the present application, the non-granular binder in the coating layer is present in an amount of < 1 wt.%, based on the total weight of the coating layer. The separator provided in present application can allow the separator to further maintain high bonding strength and good ion transport characteristics under the premise of reducing the amount of binder.

In some embodiments of the present application, the coating layer does not include a wetting agent, thereby avoiding the problem of pore clogging of the porous substrate during coating and drying processes of the coating slurry.

In some embodiments of the present application, the porous substrate has a thickness of ≤ 6 µm, optionally from 3 µm to 5 nm. As a result, this contributes to improving the energy density of the secondary battery.

In some embodiments of the present application, the coating layer has an areal density of from 0.6 g/m² to 1.5 g/m², optionally from 0.8 g/m² to 1.1 g/m². As a result, this can result in a separator having better heat resistance and ion transport characteristics.

In some embodiments of the present application, the coating layer has a thickness of ≤ 1.5 µm, optionally from 0.5 µm to 0.8 nm. As a result, this contributes to improving the energy density of the secondary battery.

In some embodiments of the present application, the separator further includes an adhesive layer, the adhesive layer is disposed on at least part of surface of the coating layer, and the adhesive layer includes a granular binder, and optionally, the granular binder includes one or more of a homopolymer or copolymer of acrylate monomer, a homopolymer or copolymer of acrylic monomer, a homopolymer or copolymer of fluorine-containing olefin monomer. The adhesive layer can not only prevent the coating layer from falling off and improve the safety performance of the secondary battery, but also improve the interface between the separator and the electrode and improve the cycle performance of the secondary battery.

In some embodiments of the present application, bonding strength between the coating layer and the porous substrate is from 16 N/m to 40 N/m, optionally from 20 N/m to 35 N/m.

In some embodiments of the present application, the separator has a longitudinal thermal shrinkage rate at 150°C for 1 h of ≤ 5%, optionally from 0.5% to 3%.

In some embodiments of the present application, the separator has a lateral thermal shrinkage rate at 150°C for 1 h of ≤ 5%, optionally from 0.5% to 3%.

In some embodiments of the present application, the separator has a longitudinal tensile strength of ≥ 2000 kg/cm², optionally from 2500 kg/m² to 4500 kg/m².

In some embodiments of the present application, the separator has a lateral tensile strength of ≥ 2000 kg/cm², optionally from 2500 kg/m² to 4500 kg/m².

In some embodiments of the present application, the separator has a wetting length of ≥ 30 mm, optionally from 30 mm to 80 mm.

In some embodiments of the present application, the separator has a wetting speed of ≥ 3 mm/s, optionally from 3 mm/s to 10 mm/s.

In some embodiments of the present application, the separator has an air permeability of ≤ 300 s/100 mL, optionally from 100 s/100 mL to 230 s/100 mL.

When the properties of the separator satisfy one or more of the above conditions, it is beneficial to improving one or more of energy density, thermal safety performance, capacity exertion and service life of the secondary battery.

A second aspect of the present application provides a method for preparing the separator according to the first aspect of the present application, including the following steps: S1, providing a porous substrate; S2, providing a coating slurry including nanocellulose; S3, coating one or more surfaces of the porous substrate with the coating slurry to form a coating layer, and drying to obtain a separator, wherein the separator includes a porous substrate and a coating layer disposed on one or more surfaces of the porous substrate, and the porous substrate has a surface tension of δ1 mN/m, the coating layer has a surface tension of δ2 mN/m, and the separator satisfies δ1/δ2 ≥ 0.68.

In some embodiments of the present application, the coating slurry further includes a filler.

In some embodiments of the present application, the coating slurry has a surface tension of from 18 mN/m to 52 mN/m.

In some embodiments of the present application, the method further includes the step of: S4, secondary coating: coating at least part of surface of the coating layer with a slurry containing a granular binder, and drying to form an adhesive layer.

The method for preparing the separator of the present application provides a coating layer through one coating process, which greatly simplifies the production process of the separator.

A third aspect of the present application provides a secondary battery, including the separator of the first aspect of the present application or the separator prepared by the method of the second aspect of the present application.

A fourth aspect of the present application provides an electrical device, including the secondary battery according to the third aspect of the present application.

The separator provided in the present application has the characteristics of excellent heat resistance and high bonding strength, thus the secondary battery using the separator can have the combined characteristics of high energy density, high thermal safety performance, and long service life. The electrical device of the present application includes the secondary battery provided by the present application, and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on these drawings without creative work.
Fig. 1 is a schematic diagram of an embodiment of a secondary battery of the present application.
Fig. 2 is an exploded schematic diagram of the embodiment of the secondary battery as shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded schematic diagram of the embodiment of the battery pack as shown in Fig. 4.
Fig. 6 is a schematic diagram of an embodiment of an electrical device of the present application as a powder supply.

In the drawings, the drawings are not necessarily drawn to scale. The reference numerals are defined as follows: 1- battery pack; 2- upper case body; 3-lower case body; 4-battery module; 5-secondary battery; 51-housing; 52-electrode assembly; and 53-cover.

### DETAILED DESCRIPTION

Hereafter, embodiments of the separator, the preparation method therefor and the secondary battery and electrical device related thereto of the present application will be specifically described in detail with appropriate references to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following description are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive of end values and may be combined arbitrarily, that is, any lower limit may be combined with any upper limit to form a range. For example, if ranges of 60-120 and 80-110 are listed for a particular parameter, it is to be understood that ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such a technical solution should be considered to be included in the disclosure of the present application.

Unless stated otherwise, all technical features and optional technical features of the present application can be combined with each other to form a new technical solution, and such a technical solutions should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprise steps (a), (b) and (c), steps (a), (c) and (b), or steps (c), (a) and (b), and the like.

Unless stated otherwise, the transition phases "comprising" and "including" mentioned in the present application means that it is drafted in an open mode or in a close mode. For example, the transition phases "comprising" and "including" may mean that other components not listed may also be included or contained, or only the listed components may be included or contained.

In the present application herein, unless otherwise stated, the term "or" is inclusive. For example, the phrase "A or B" means "A, B, or both A and B." More specifically, any of the following conditions satisfy the condition "A or B": A is true (or exists) and B is false (or does not exist); A is false (or does not exist) and B is true (or exists); or both A and B are true (or exist).

In this application, the terms "plurality" and "multiple" and "several" refer to two or more.

Unless otherwise specified, the terms used in this application have the well-known meanings generally understood by those skilled in the art.

Unless otherwise specified, a numerical value for each parameter mentioned in the present application can be determined by various test methods commonly used in the art, for example, can be determined according to the test methods given in the present application.

Normally, a secondary battery comprises an electrode assembly and an electrolyte, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows ions to pass through to form a circuit. Therefore, the stability, especially the thermal stability and structural stability, of the separator will directly affect the safety performance of a secondary battery.

The inventors of the present application have unexpectedly found during the research that by disposing a coating layer comprising nanocellulose on surface of porous substrate of the separator, and reasonably controlling the ratio of the surface tension of the porous substrate and the surface tension of the coating layer in the suitable range, the separator can have the combined characteristics of excellent heat resistance, high bonding strength, thereby enabling the secondary battery to have the combined characteristics of high energy density, high thermal safety performance and long service life.

### Separator

Specifically, the first aspect of the present application provides a separator, comprising a porous substrate and a coating layer disposed on one or more surfaces of the porous substrate, wherein the coating layer comprises nanocellulose, and the porous substrate has a surface tension of δ1 mN/m, the coating layer has a surface tension of δ2 mN/m, and the separator satisfies δ1/δ2 ≥ 0.68

Currently, the separators used in commercial secondary batteries are usually polyolefin films, such as polyethylene films, polypropylene films or polypropylene/polyethylene/polypropylene three-layer composite films, with melting points between 130°C and 160°C. As a result, the heat resistance of the separator is relatively poor, and the separator will shrink severely when heated, increasing the risk of short circuit between positive electrode and negative electrode. Applying a heat-resistant inorganic ceramic layer on a porous substrate (which may be, for example, a polyolefin film, nonwoven fabric and the like) can improve the heat resistance of the separator. However, due to the relatively large particle size of commercially available inorganic ceramic particles, the number of layers stacked on the porous substrate is relatively low (usually ≤ 5 layers), which in turn leads to very limited improvement effect on the heat resistance of the separator; moreover, it will also increase the overall thickness of the separator, resulting in the inability to balance the energy density of secondary battery, especially in the field of power battery, which is not conducive to improving the cruising range. In addition, the bonding strength between the inorganic ceramic layer and the porous substrate is also relatively poor, so during the long-term charge and discharge process of the secondary battery the risk of inorganic ceramic layer falling off after being soaked in the electrolyte is relatively high.

Nanocellulose refers to the general term of cellulose having any one dimensional size of nano-scale (e.g., 100 nm or lower), and has the properties of both cellulose and nano-particles, and may be a polymer nanomaterial extracted from wood, cotton, and straw and the like in nature through one or more means in chemistry, physics, biology, etc. It has the advantages including for example wide sources, low cost, biodegradability, high modulus and high specific surface area, so it is an excellent substitute for traditional petrochemical resources and can effectively alleviate the problems such as environmental pollution and shortage of petrochemical resources. Nanocellulose also has good high temperature resistance characteristics and small volume change after being heated, thus can improve the heat resistance of the separator and reduce that degree of shrinkage of the separator when heated, reduce the risk of short circuit between the positive electrode and the negative electrode, and enable the secondary battery to have high thermal safety performance. Compared with traditional inorganic ceramic particles, nanocellulose has smaller density, which can further reduce the weight of secondary battery.

Therefore, when the coating layer of the present application comprises nanocellulose, it helps to improve the heat resistance of the separator, and meanwhile the coating layer of the present application has a smaller thickness and weight than the conventional inorganic ceramic layer, thereby further helping to improve the volumetric energy density and the gravimetric energy density of the secondary battery. In addition, since the coating layer of the present application has high heat resistance, thus thinner porous substrates can be used, which can further reduce the weight of the secondary battery and improve volumetric energy density and gravimetric energy density.

In the course of research, the inventors of the present application have found that the holiday problem is very easily to occur when a coating slurry comprising nanocellulose is applied on the surface of a porous substrate, which reduces the mechanical strength of the prepared separator and increases the risk of short circuit between the positive and negative electrodes.

The inventors of the present application have surprisingly found in the course of their studies that, by controlling the surface tension δ1 mN/m of the porous substrate and the surface tension δ2 mN/m of the coating layer (all referring to the dried coating layer in the present application) to satisfy δ1/δ2 ≥ 0.68, high bonding strength between the porous substrate and the coating layer can be achieved, thereby avoiding the problem of falling off of coating layer during long-term charge and discharge of the secondary battery; meanwhile, it can also avoid the holiday problem during the application of the coating slurry, thus the coating layer further has the characteristics of high uniformity and high coverage on the porous substrate, thereby allowing the separator to have excellent heat resistance. When δ1/δ2 is less than 0.68 due to relatively low surface tension of the porous substrate and relatively high surface tension of the coating layer, holiday problem is easily to occur during the application of the coating slurry, which results in poor heat resistance and poor bonding strength of the separator and thus a relatively high risk of coating layer falling off during long-term charge and discharge of secondary battery.

Therefore, the separator provided in the present application has the characteristics of excellent heat resistance and high bonding strength, thus the secondary battery using the separator can have the combined characteristics of high energy density, high thermal safety performance, and long service life.

The inventors of the present application have also surprisingly found in the course of their studies that the ratio of the surface tension of the porous substrate to the surface tension of the coating layer should not be too high; when such ratio is too high, the gas permeability and ion transport characteristics of the separator may become worse, which may affect the electrochemical performance and kinetic performance of secondary battery, for example, the cycle performance of secondary battery. In some embodiments, optionally, 0.68 ≤ δ1/δ2 ≤ 1.8, 0.7 ≤ δ1/δ2 ≤ 1.5, 0.7 ≤ δ1/δ2 ≤ 1.2, 0.7 ≤ δ1/δ2 ≤ 1.0, or 0.7 ≤ δ1/δ2 ≤ 0.9. As a result, the separator may better have the combined characteristics of excellent heat resistance and high bonding strength and good ion transport, thereby enabling the the secondary battery using the separator to better have the combined characteristics of high energy density, high thermal safety performance, and long service life.

In some embodiments, the surface tension δ1 mN/m of the porous substrate may satisfy δ1 ≥ 23, optionally 23 ≤ δ1 ≤ 45. When the surface tension of the porous substrate is within the suitable ranges, holiday problem does not easily occur during the application of the coating slurry, and the coverage area on the porous substrate is relatively large, thereby enabling the separator to have more excellent heat resistance and the secondary battery to have better safety performance; meanwhile, it further facilitates maintaining the bonding strength between the porous substrate and the coating layer in a relatively high range and extremely reduces the risk of coating layer falling off.

In some embodiments, the surface tension δ2 mN/m of the coating layer satisfies 25 ≤ δ2 ≤ 50, optionally, 30 ≤ δ2 ≤ 45. When the surface tension of the coating layer is within the suitable ranges, it is beneficial to maintaining the bonding strength between the porous substrate and the coating layer in a relatively high range and extremely reduces the risk of coating layer falling off; meanwhile, it is also beneficial to the infiltration of the electrolyte into the separator, thereby improving the ion transport characteristics of the separator and improving the capacity exertion characteristics of the secondary battery.

During the long-term charge and discharge of the secondary battery, the volume of the whole battery will increase due to the irreversible changes of microstructure of the positive electrode active materials and negative electrode active materials. Especially, when the secondary battery is charged rapidly, the increase of the volume of the negative electrode active materials is higher after the intercalation of ions. After the expansion of the battery, the separator will be squeezed and/or stretched, which will easily lead to the damage of the separator and thus increase the risk of short circuit between positive electrode and negative electrode. Therefore, the separator is also required to have good external force extrusion resistance. In some embodiments, the coating layer further comprises a filler. The presence of the filler helps the coating layer to have a stable spatial network structure, which may improve the ion transport property and heat resistance of the separator; In addition, it may also improve the tensile strength, puncture resistance and external force extrusion resistance of the separator.

In some embodiments, the filler may comprise one or more selected from inorganic particles and organic particles.

In some embodiments, the decomposition temperature of the filler may be 200°C or higher, so the filler may have good thermal stability and be not easily decomposed, thereby further improving the heat resistance of the separator.

Inorganic particles have good thermal stability and cannot be easily decomposed, and usually have hydroxyl groups on their surfaces, so they can easily make contact with nanocellulose to form a stable spatial network structure. In some embodiments, optionally, the inorganic particles comprise one or more of inorganic particles with a dielectric constant of 5 or more, inorganic particles with ion conductivity but without ion storage capability, and inorganic particles capable of undergoing electrochemical reactions.

Optionally, the inorganic particles with a dielectric constant of 5 or more comprise one or more of: oehmite, aluminum oxide (or alumina), zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (abbreviated as PZT), Pb₁₋ₘLaₘZr₁₋ₙTiₙO₃ (abbreviated as PLZT, 0<m<1, 0<n<1), Pb(Mg₃Nb_{2/3})O₃-PbTiO₃ (abbreviated as PMN-PT) and their respective modified inorganic particles. Optionally, the modification mode of each inorganic particle may be chemical modification and/or physical modification. The chemical modification mode includes coupling agent modification (by using for example silane coupling agent, titanate coupling agent, etc.), surfactant modification, and polymer grafting modification, etc. The physical modification mode may be mechanical force dispersion, ultrasonic dispersion, high-energy treatment and the like. Through modification treatment, the agglomeration of inorganic particles may be reduced, thus forming a more stable and uniform spatial network structure by contacting inorganic particles with nanocellulose; in addition, by modifying inorganic particles with surface active materials or polymer or coupling agents with specific functional groups, it also helps to improve the infiltration of the electrolyte into the coating layer and the bonding strength between the coating layer and the porous substrate.

Optionally, the inorganic particles with ion conductivity but without ion storage capability comprise one or more of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3} and P₂S₅ type glass Liₓ₈P_{y8}S_{z4}, wherein 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, 0 < z4 < 7. As a result, this can further improve the ion transport property of the separator.

Optionally, the inorganic particles capable of undergoing electrochemical reactions comprise one or more of lithium-containing transition metal oxides, lithium-containing phosphates, carbon-based materials, silicon-based materials, tin-based materials, and lithium-titanium compounds.

Organic particles have good thermal stability and cannot be easily decomposed, which can improve the heat resistance of the separator; at the same time, when the internal temperature of the secondary battery reaches the melting point of organic particles due to overcharge abuse, heat abuse and the like, the organic particles may melt and be sucked into the micropores of the porous substrate due to capillary action, which results in closing pores and breaking circuits and thus facilitates the high safety performance of the secondary battery.

In some embodiments, the organic particles comprise, but are not limited to, one or more of polyethylene particles, polypropylene particles, polystyrene particles, cellulose, cellulose modifiers (e.g. carboxymethylcellulose), melamine resin particles, phenolic resin particles, polyester particles (e.g. polyethylene terephthalate, polyethylene naphthalate, polybutylene terephthalate), organic silicon resin particles, polyimide particles, polyamide imide particles, polyarylamide particles, polyphenylene sulfide particles, polysulfone particles, polyethersulfone particles, polyetheretherketone particles, polyaryletherketone particles, and copolymers of butyl acrylate and ethyl methacrylate (e.g. crosslinked polymers of butyl acrylate and ethyl methacrylate).

In some embodiments, optionally, the glass transition temperature of the organic particles may be 130°C or higher. Therefore, when the internal temperature of the secondary battery reaches 130°C, the organic particles will not change from the glassy state to the viscous flow state, thus ensuring that the separator does not shrink violently. More optionally, the organic particles include but are not limited to one or more of melamine formaldehyde resin particles, phenolic resin particles, polyester particles, organosilicon resin particles, polyimide particles, polyamide imide particles, polyarylamide particles, polyphenylene sulfide particles, polysulfone particles, polyether sulfone particles, polyether ether ketone particles, and polyarylene ether ketone particles.

In some embodiments, the filler in the coating layer may be present in an amount of ≥ 60 wt.%, optionally from 65 wt.% to 90 wt.%, based on the total weight of the coating layer. As a result, this can ensure that the coating slurry has appropriate viscosity, which is more conducive to coating process; In addition, it is also beneficial to better overlap between the filler and the three-dimensional skeleton structure to form a stable spatial network structure, thereby further improving the heat resistance, tensile strength, puncture resistance, and external compression resistance of the separator.

In some embodiments, the filler comprises primary particles, secondary particles, and the combination thereof, and optionally the filler at least comprises secondary particles.

The filler with secondary particle morphology has a relatively small particle size and relatively high specific surface area and better affinity with nanocellulose, and meanwhile the nanocellulose may overlap (make contact) in the gaps between the primary particles for forming the filler with secondary particle morphology, so that the nanocellulose and the filler with secondary particle morphology overlap to form an integrated effect, and the resulting coating layer may have a more stable spatial network structure, thereby further improving the performance of the separator.

The filler with primary particle morphology has a relatively large particle size and relatively high strength, thus can better exert its supporting role in the coating layer and reduce the amount of binder and reduce the heat shrinkage of the separator and improve the heat resistance of the separator; in addition, it also helps the coating layer to have more pore/channel structure and less moisture content when the filler is present in a relatively low amount, thereby further improving the ion transport characteristics and the electrolyte infiltration characteristics of the separator.

In some embodiments, the filler with secondary particle morphology is present in an amount of from 50 wt.% to 100 wt.%, optionally from 90 wt.% to 99 wt.%, based on the total weight of the filler.

In some embodiments, the filler with primary particle morphology has an average particle size Dv50 of from 100 nm to 800 nm, optionally from 200 nm to 400 nm.

In some embodiments, the filler with secondary particle morphology has an average particle size Dv50 of ≤ 200 nm, optionally from 50 nm to 200 nm.

In some embodiments, the filler comprises inorganic particles with primary particle morphology, inorganic particles with secondary particle morphology, and the combination thereof, and optionally the filler at least comprises inorganic particles with secondary particle morphology.

In some embodiments, the inorganic particles with secondary particle morphology have a crystal form including two or more of α crystal form, θ crystal form, γ crystal form and η crystal form, optionally have a crystal form including two or more of α crystal form, θ crystal form, and γ crystal form.

In the X-ray diffraction spectra measured by using an X-ray diffraction meter, the inorganic particles with secondary particle morphology of α crystal form have diffraction peaks at 20 of 57.48° ± 0.2° and 43.34° ± 0.2°. In some embodiments, the α crystal form is present in an amount of ≥1.2 wt.%, optionally from 1.2 wt.% to 10 wt.%, more optionally from 1.2 wt.% to 5 wt.%, based on the total weight of the inorganic particles with secondary particle morphology.

In the X-ray diffraction spectra measured by using an X-ray diffraction meter, the inorganic particles with secondary particle morphology of θ crystal form have diffraction peaks at 20 of 36.68° ± 0.2° and 31.21° ± 0.2°. In some embodiments, the θ crystal form is present in an amount of ≥50 wt.%, optionally from 60 wt.% to 85 wt.%, more optionally from 60 wt.% to 82.5 wt.%, based on the total weight of the inorganic particles with secondary particle morphology.

In the X-ray diffraction spectra measured by using an X-ray diffraction meter, the inorganic particles with secondary particle morphology of γ crystal form have diffraction peaks at 20 of 66.95° ± 0.2° and 45.91° ± 0.2°. In some embodiments, the γ crystal form is present in an amount of ≥10 wt.%, optionally from 15 wt.% to 60 wt.%, more optionally from 15 wt.% to 35 wt.%, based on the total weight of the inorganic particles with secondary particle morphology.

In the X-ray diffraction spectra measured by using an X-ray diffraction meter, the inorganic particles with secondary particle morphology of η crystal form have diffraction peaks at 20 of 31.89° ± 0.2° and 19.37° ± 0.2°. In some embodiments, the η crystal form is present in an amount of ≤ 5 wt.%, optionally ≤ 2 wt.%, more optionally ≤ 1 wt.%, based on the total weight of the inorganic particles with secondary particle morphology.

Inorganic particles with secondary particle morphology of α crystal form have the advantages of high hardness, good heat resistance, low dielectric constant, high safety and high true density; inorganic particles with secondary particle morphology of θ crystal form have moderate specific surface area and hardness, which can better improve the heat resistance and ion transport characteristics of the separator at the same time; inorganic particles with the secondary morphology of γ crystal form and η crystal form have the advantage of large specific surface area. Thus, by selecting the fillers of different crystal forms, it facilitates improving heat resistance and ion transport characteristics of the separator.

In some embodiments, the inorganic particles with secondary particle morphology have a crystal form including α crystal form, θ crystal form, γ crystal form and η crystal form, and the α crystal form is present in an amount of 1.2 wt.% to 5 wt.%, the θ crystal form is present in an amount of from 60 wt.% to 82.5 wt.%, the γ crystal form is present in an amount of from 15 wt.% to 35 wt.%, and the η crystal form is present in an amount of ≤ 1 wt%, based on the total weight of the inorganic particles with secondary particle morphology.

The X-ray diffraction spectrum of the inorganic particles with the secondary particle morphology can be obtained by testing the following process including: oven drying the inorganic particles with the secondary particle morphology, milling in a mortar (such as an agate mortar) for 30 minutes, and then testing using an X-ray diffractometer (such as a Miniflex 600-C) to obtain the X-ray diffraction spectrum. Cu target, Ni filter, tube pressure of 40 KV, tube flow of 15 mA, and continuous scanning range of from 5° to 80° may be used during the test.

In some embodiments, the inorganic particles with primary particle morphology have a crystal form including one or more of α crystal form and γ crystal form, and optionally have a crystal form including α crystal form. Inorganic particles with primary particle morphology of α crystal form have the advantages of high hardness, good heat resistance, low dielectric constant, high safety and high true density, which can better improve the heat resistance of the separator.

In some embodiments, the inorganic particles with primary particle morphology have a crystal form including α crystal form, and the α crystal form is present in an amount of ≥ 90 wt.%, optionally from 95 wt.% to 100 wt.%, based on the total weight of the inorganic particles with primary particle morphology.

In some embodiments, the nanocellulose may comprise one or more of cellulose nanofibers (CNF, also referred to as nanofibril cellulose or microfibril cellulose), cellulose nanowhiskers (CNC, also referred to as cellulose nanocrystals, nanocrystalline cellulose), and bacterial nanocellulose (BNC, also referred to as bacterial cellulose or microbial cellulose), and optionally is cellulose nanowhiskers. The cellulose nanowhiskers may have higher crystallinity, thereby reducing their hydrophilicity, which in turn facilitates moisture discharge during the drying process and thus results in lower moisture content in the coating layer of the present application. In addition, cellulose nanowhiskers may easily make contact with the filler, which allows the coating layer to have a more stable spatial network structure, thereby further improving the performance of the separator.

In some embodiments, the nanocellulose comprises one or more of unmodified nanocellulose (also referred to as hydroxyl nanocellulose) and modified nanocellulose, and optionally is modified nanocellulose.

The modified nanocellulose comprises a modifying group. In some embodiments, the modifying group may comprise one or more of an amino group, a carboxylic acid group, an aldehyde group, a sulfonic acid group, a boric acid group, and a phosphoric acid group, and optionally comprises one or more of a sulfonic acid group, a boric acid group, and a phosphoric acid group.

The inventors have found in further research that when the nanocellulose has the above-mentioned specific modifying group, on one hand, it can effectively improve the heat resistance of the separator, and improve the thermal safety performance of the secondary battery; on the other hand, it further facilitates maintaining the bonding strength between the porous substrate and the coating layer in a relatively high range. When the nanocellulose has the above-mentioned specific modifying groups, the nanocellulose may further form a more stable spatial network structure with the filler, which may further improve the ion transport property and voltage breakdown resistance properties of the separator, thereby being beneficial to matching with the high-voltage positive electrode active materials and further improving the energy density of the secondary battery. In addition, the presence of modifying groups may further reduce the proportion of hydroxyl groups, which can ensure that the coating slurry has an appropriate viscosity and is thus more conducive to coating process, thereby improving the production efficiency of separator and the uniformity of coating layer.

In some embodiments, the modified nanocellulose comprises a hydroxyl group and a modifying group, and a molar ratio of the modifying group to the hydroxyl group may be from 1:4 to 4:1, optionally from 2:3 to 7:3. When the molar ratio of the modifying group to the hydroxyl group is in the appropriate ranges, the heat resistance and ion transport characteristics of the separator can be further improved, and the separator can further have high bonding strength.

The types of modifying group in nanocellulose may be determined by infrared spectroscopy. For example, the infrared spectrum may be used for test a material by determine the characteristic peaks contained in the material, thus determining the types of modifying group. Specifically, instruments and methods known in the field, for example an infrared spectrometer (such as IS10 Fourier transform infrared spectrometers of Nicolet Company in the United States), may be used for performing an analysis of infrared spectrum of a material according to GB/T 6040-2019 General Rules for Infrared Analysis.

In some embodiments, the nanocellulose may have an average diameter of ≤ 40 nm, optionally from 10 nm to 35 nm. When the average diameter of the nanocellulose is in the appropriate ranges, the heat resistance of the separator can be further improved and the thermal shrinkage rate of the separator can be reduced.

In some embodiments, the nanocellulose has an average length of from 100 nm to 600 nm, optionally from 200 nm to 500 nm. When the average length of the nanocellulose is in the appropriate ranges, the heat resistance and ion transport properties of the separator may be further improved.

In some embodiments, the nanocellulose has an aspect ratio of from 5 to 60, optionally from 15 to 30. When the aspect ratio of the nanocellulose is in the appropriate ranges, the ion transport characteristics of the separator can be further improved.

The average length and average diameter of nanocellulose may be measured by the following method: cutting a sample of 3.6 mm × 3.6 mm from any area of the separator, mapping the micro-morphology and structure of the coating layer in the sample by scanning electron microscope (such as ZEISS Sigma 300) using high vacuum mode and a working voltage of 3kV and magnification of 30,000 times, to obtain SEM images; selecting several (for example, 5 or more) test areas for statistically recording lengths according to the obtained SEM images, with each test area having a size of 0.5 µm × 0.5 µm, and then taking the average of the lengths obtained from individual test areas as the average length of nanocellulose; selecting several (for example, 5 or more) test areas for statistically recording diameters using Nano Measurer particle size distribution statistics software according to the obtained SEM images, with each test area having a size of 0.5 µm × 0.5 µm, and then taking the average of the diameters obtained from individual test areas as the average diameter of nanocellulose.

In some embodiments, the nanocellulose may have a weight average molecular weight of from 10000 to 60000, optionally from 30000 to 50000. When the weight average molecular weight of nanocellulose is in the appropriate ranges, nanocellulose may be not only avoided from blocking the pore/channel structure of the separator, but also the viscosity of the coating slurry may be maintained in a reasonable range. As a result within, the slurry may have better fluidity and infiltration during coating, thereby facilitating improving the quality of the coating layer and thus further improving the heat resistance and ion transport properties of the separator.

In some embodiments, the nanocellulose may have a shape including one or more of tubular (e.g. hollow tubular), fibrous shape and rod shape. Nanocellulose having appropriate shape is more conducive to the formation of a stable spatial network structure by overlapping/contacting with filler, which can further improve the ion transport characteristics of the separator.

In some embodiments, the nanocellulose in the coating layer may be present in an amount of ≤ 8 wt.%, optionally from 8 wt.% to 35 wt.%, more optionally from 10 wt.% to 25 wt.%, based on the total weight of the coating layer. When the amount of nanocellulose is in the appropriate ranges, it can ensure that the coating slurry has an appropriate viscosity, which is more conducive to coating process. When the amount of nanocellulose is in the appropriate ranges, it can further enables to maintain high bonding strength between the coating layer and the porous substrate and improve the structural stability of the separator. In addition, when the amount of nanocellulose is in the appropriate ranges, it is also conducive to overlap between the nanocellulose and other components (such as a filler) to form a stable spatial network structure, thus can further improve the ion conductivity and external force extrusion resistance and voltage breakdown resistance of the separator.

In some embodiments, the coating layer may further comprise a non-granular binder. The type of the non-granular binder is not particularly limited in the present application, and any well-known material having good adhesiveness can be selected. Optionally, the non-granular binder comprises an aqueous solution-type binder, which has the advantages of good thermodynamic stability and environmental protection, thereby facilitating the preparation and application of the coating slurry. As an example, the aqueous solution-type binder comprises one or more of an aqueous solution-type acrylic resin (for example, acrylic acid, methacrylic acid, sodium acrylate monomer homopolymer or copolymer with other comonomers), polyvinyl alcohol (PVA), isobutylene-maleic anhydride copolymer, and polyacrylamide.

Optionally, the non-granular binder in the coating layer is present in an amount of < 1 wt.%, based on the total weight of the coating layer. The nanocellulose and the filler in the coating layer of the present application can overlap to form a stable spatial network structure, thereby enabling the separator to maintain high bonding strength and good ion transport properties under the premise of reducing the amount of binder.

**In** some embodiments, the coating layer does not comprise a wetting agent, such as common acrylate-based wetting agents and polyoxyethylene-polyoxypropylene block copolymer-based wetting agents. The wetting agent is usually a compound with low surface tension and high fluidity, thus easily leads to the problem of pore clogging of the porous substrate during coating and drying of the coating slurry. The coating layer of the present application does not comprise a wetting agent, so the problem of pore clogging of the porous substrate during coating and drying of the coating slurry can be avoided. The inventors have further found in the course of their studies that the coating slurry provided in the present application can have good wettability, so a wetting agent is not necessarily used.

The material of the porous substrate is not specially limited in the present application, and any well-known substrate with good chemical and mechanical stability may be used, for example, one or more of glass fibers, nonwoven fabrics, polyolefin-based films (e.g. polyethylene, polypropylene, and polyvinylidene fluoride). The porous substrate may be a single-layer film or a multilayer film. When the porous substrate is a multilayer composite film, the materials of individual layers may be the same or different.

In some embodiments, the porous substrate may have a thickness of ≤ 6 µm, optionally from 3 µm to 5 nm. The coating layer of the present application may significantly improve the heat resistance of the separator, so that a thinner porous substrate can be used, thus contributing to improving the energy density of the secondary battery.

In some embodiments, the coating layer may have an areal density of from 0.6 g/m² to 1.5 g/m², optionally from 0.8 g/m² to 1.1 g/m². As a result, this can result in a separator having better heat resistance and ion transport characteristics.

In some embodiments, the coating layer may have a thickness of ≤ 1.5 µm, optionally from 0.5 µm to 0.8 nm. As a result, this contributes to improving the energy density of the secondary battery.

In some embodiments, the separator may further comprise an adhesive layer, the adhesive layer is disposed on at least part of surface of the coating layer, and the adhesive layer comprises a granular binder. The adhesive layer can not only prevent the coating layer from falling off and improve the safety performance of the secondary battery, but also improve the interface between the separator and the electrode and improve the cycle performance of the secondary battery.

Optionally, the granular binder comprises one or more of acrylate monomer homopolymer or copolymer, acrylic monomer homopolymer or copolymer, fluorine-containing olefin monomer homopolymer or copolymer. The comonomer includes, but is not limited to, one or more of an acrylate monomer, an acrylic monomer, an olefin monomer, a halogen-containing olefin monomer, a fluoroether monomer, and the like.

Optionally, the granular binder comprises a vinylidene fluoride-based polymer, such as a homopolymer of vinylidene fluoride monomer (VDF) and/or a copolymer of vinylidene fluoride monomer and a comonomer. The comonomer may be one or more of an olefin monomer, a fluorine-containing olefin monomer, a chlorine-containing olefin monomer, an acrylate monomer, an acrylic monomer, and a fluoroether monomer. Optionally, the comonomer may comprise one or more of trifluoroethylene (VF3), chlorotrifluoroethylene (CTFE), 1,2-difluoroethylene, tetrafluoroethylene (TFE), hexafluoropropylene (HFP), perfluoro(alkylvinyl) ethers such as perfluoro(methylvinyl) ether (PMVE), perfluoro(ethylvinyl) ether (PEVE), perfluoro(propylvinyl) ether (PPVE), perfluoro(1,3-dioxole), and perfluoro(2,2-dimethyl-1,3-dioxole) (PDD).

In some embodiments, bonding strength between the coating layer and the porous substrate is from 16 N/m to 40 N/m, optionally from 20 N/m to 35 N/m. The separator of the present application has high bonding strength, so the coating layer is not easily to fall off during a long-term charge-discharge cycle of the secondary and the secondary battery has better safety performance.

In some embodiments, the separator has a longitudinal thermal shrinkage rate at 150°C for 1 h of ≤ 5%, optionally from 0.5% to 3%.

In some embodiments, the separator has a lateral thermal shrinkage rate at 150°C for 1 h of ≤ 5%, optionally from 0.5% to 3%.

The separator of the present application has low thermal shrinkage rate in both the lateral direction and the longitudinal direction at high temperature of 150 °C, which can further improve the safety performance of the secondary battery.

In some embodiments, the separator has a longitudinal tensile strength of ≥ 2000 kg/cm², optionally from 2500 kg/m² to 4500 kg/m².

In some embodiments, the separator has a lateral tensile strength of ≥ 2000 kg/m², optionally from 2500 kg/m² to 4500 kg/m².

The separator of the present application has high tensile strength in both the lateral direction and the longitudinal direction, which results in small probability of breakage of the separator when the secondary battery is expanded, thereby further improving the safety performance of the secondary battery.

In some embodiments, the separator has a wetting length of ≥ 30 mm, optionally from 30 mm to 80 mm.

In some embodiments, the separator has a wetting speed of ≥ 3 mm/s, optionally from 3 mm/s to 10 mm/s.

The separator of the present application has good electrolyte infiltration characteristics, which can improve the ion transport and the capacity exertion characteristics of the secondary battery.

In some embodiments, the separator has an air permeability of ≤ 300 s/100 mL, optionally from 100 s/100 mL to 230 s/100 mL. The separator of the present application has high air permeability, which can improve the ion transport characteristics of the separator.

In this application, the average particle size Dv50 of a material has well-known meaning in the art, and may be measured with known instruments and methods in the art. For example, it can be readily measured according to "Particle Size Analysis - Laser Diffraction Method" of GB/T 19077-2016 using a laser particle size analyzer (for example, Master Size 3000).

In this application, the specific surface area of a material has well-known meaning in the art, and may be measured with known instruments and methods in the art. For example, a method for analyzing and testing specific surface area by nitrogen adsorption is used according to GB/T 19587-2017, and the specific surface area can be calculated by the BET (BrunauerEmmett Teller) method. Optionally, the analyzing and testing specific surface area by nitrogen adsorption may be performd by a Tri-Star Model 3020 specific surface area & porosity analyzer from Micromeritics, USA.

In this application, the surface tension of the coating layer and the surface tension of the porous substrate have well-known meanings in the art, and may be measured with known methods in the art. For example, a dyne pen may be used for testing.

In the present application, bonding strength between the coating layer and the porous substrate have well known meanings in the art and may be measured using methods known in the art. For example, bonding strength may be obtained by performing a 180° peel test referring to standard GB/T 2792-2014 using a tensile tester (e.g. a GOTECH tensile machine, and a starting fixture spacing can be 40 mm) at a tensile speed of 50 mm/min followed by calculation.

In the present application, the thermal shrinkage rate, tensile strength, and air permeability of the separator have well-known meanings in the art and can be measured by methods known in the art. For example, they may be tested with reference to GB/T 36363-2018.

In this application, the wetting length and wetting speed of the separator have well-known meanings in the art, and may be measured with known instruments and methods in the art. An exemplary test method is as follows: cutting a separator into a sample with a width of 5mm and a length of 100mm, and fixing both ends of the sample and placing horizontally; Taking 0.5mg of electrolyte and dropping it in the center of the sample, and after the specified time (1min in this application), taking a photo and measuring the length of electrolyte diffusion, thereby obtaining the wetting length and wetting speed of the separator. In order to ensure the accuracy of the test results, a plurality of samples (for example, from 5 to 10) can be tested, and the test results are obtained by calculating average value. The electrolyte may be prepared by mixing ethylene carbonate (EC), ethyl methyl carbonate (EMC), and diethyl carbonate (DEC) in a volume ratio of 30:50:20 to obtain an organic solvent, and then dissolving a fully dried LiPF₆ in the above organic solvent, to prepare an electrolyte with a concentration of 1mol/L.

The parameters (for example, areal density, thickness, etc.) of coating layer in the above separator are all parameters of coating layer on one side of the porous substrate.

When the coating layer is disposed on both sides of the porous substrate, if the coating parameters on either side satisfy the requirements in the present application, the separator is considered to fall within the scope of protection of the present application.

### Preparation methods

A second aspect of embodiments of the present application provides a method for preparing the separator according to the first aspect of the present application, comprising the following steps: S1, providing a porous substrate; S2, providing a coating slurry comprising nanocellulose; S3, coating one or more surfaces of the porous substrate with the coating slurry to form a coating layer, and drying to obtain a separator, wherein the separator includes a porous substrate and a coating layer disposed on one or more surfaces of the porous substrate, and the porous substrate has a surface tension of δ1 mN/m, the coating layer has a surface tension of δ2 mN/m, and the separator satisfies δ1/δ2 ≥ 0.68.

In some embodiments, 0.68 ≤ δ1/δ2 ≤ 1.8, 0.7 ≤ δ1/δ2 ≤ 1.5, 0.7 ≤ δ1/δ2 ≤ 1.2, 0.7 ≤ δ1/δ2 ≤ 1.0, or 0.7 ≤ δ1/δ2 ≤ 0.9.

In some embodiments, in S1, the surface tension δ1 mN/m of the porous substrate may satisfy δ1 ≥ 23, optionally 23 ≤ δ1 ≤ 45. When the surface tension of the porous substrate is within the suitable ranges, holiday problem does not easily occur during the application of the coating slurry, and the coverage area on the porous substrate is relatively large, thereby enabling the separator to have more excellent heat resistance and the secondary battery to have better safety performance; meanwhile, it further facilitates maintaining the bonding strength between the porous substrate and the coating layer in a relatively high range and extremely reduces the risk of coating layer falling off.

In the present application, porous substrates with different surface tensions may be obtained through commercial purchase, and the surface of the porous substrate may also be treated with an oxidizing agent or irradiated with ultraviolet light to impart the desirable surface tension.

In some embodiments, in S2, the solvent may be water, such as deionized water.

In some embodiments, in S2, the coating slurry may further comprise other components, for example, may further comprise a binder, a filler and the like. Optionally, the binder comprises an aqueous solution-type binder. Optionally, the filler at least comprises secondary particles.

In some embodiments, in S2, the coating slurry does not comprise a wetting agent.

In some embodiments, in S2, the coating slurry may have a surface tension of from 18 mN/m to 52 mN/m.

In some embodiments, in S2, the solid content of the slurry may be controlled between 28% and 45%, for example, may be between 30% and 38%. When the solid content of the coating slurry is within the above range, the film surface problem of the coating layer and the probability of occurrence of coating unevenness can be effectively reduced, thereby further improving the energy density and safety performance of the secondary battery.

In some embodiments, in S2, the coating slurry may have a viscosity of from 300 mPa·s to 1800 mPa·s, optionally from 500 mPa·s to 1300 mPa·s. The viscosity of the coating slurry may be tested using a rotational viscometer.

In some embodiments, the above nanocellulose can be obtained as follows: S21, providing a cellulose powder having a whiteness of ≥ 80%; S22, mixing and reacting the obtained cellulose powder with a modification solution, washing and removing impurities to obtain cellulose nanowhiskers; S23, adjusting the pH of the obtained cellulose nanowhiskers to neutral (e.g., pH of from 6.5 to 7.5), and grinding and cutting to obtain nanocellulose.

Optionally, in S21, the above cellulose powder having a whiteness of ≥ 80% can be obtained commercially, or can be obtained by a chemical method (e.g., acid hydrolysis method, alkali treatment method, Tempo catalytic oxidation method), a biological method (e.g., enzymatic treatment method), a mechanical method (e.g., ultrafine grinding, ultrasonic crushing, high-pressure homogenization), or the like. The fiber raw material for preparing the above cellulose powder having a whiteness of ≥ 80% may include one or more of plant fibers such as cotton fibers (e.g. Gossypium fibers, kapok fibers), hemp fibers (e.g. sisal fibers, ramie fibers, jute fibers, flax fibers, marihuana fibers, abaca fibers, etc.), brown fibers, wood fibers, bamboo fibers, and grass fibers.

In some embodiments, the above-mentioned cellulose powder having a whiteness of ≥ 80% can also be prepared by: loosening the fiber raw material and slag removal, cooking with an alkaline solution (e.g. aqueous NaOH solution, which may have a concentration of 4 wt.% to 20 wt.%, optionally 5 wt.% to 15 wt.%), and then sequentially subjecting to water washing to remove impurities (e.g., water washing for 3 times to 6 times), bleaching (using for example sodium hypochlorite and/or hydrogen peroxide), acid washing to remove impurities, water washing to remove impurities, water discharging, and air drying, to obtain the cellulose powder.

In some embodiments, in S22, the modification solution may be an acid solution (e.g., an aqueous sulfuric acid solution, an aqueous boric acid solution, an aqueous phosphoric acid solution, an aqueous acetic acid solution) or an alkaline solution (for example a urea solution in organic solvent). Optionally, the modification solution is an acid solution.

Optionally, the acid solution may have a concentration of 5 wt.% to 80 wt.%. When an aqueous sulfuric acid solution is used as the modification solution, the concentration of the acid solution may be 40 wt.% to 80 wt.%, thus nanocellulose having a sulfonic acid group can be obtained. When an aqueous boric acid solution is used as the modification solution, the concentration of the acid solution may be 5 wt.% to 10 wt.%, thus nanocellulose having a boric acid group can be obtained. When an aqueous phosphoric acid solution is used as the modification solution, the concentration of the acid solution may be 45 wt.% to 75 wt.%, thus nanocellulose having a phosphoric acid group can be obtained. When an aqueous acetic acid solution is used as the modification solution, the concentration of the acid solution may be 40 wt.% to 80 wt.%, thus nanocellulose having a carboxylic acid group can be obtained.

Optionally, the urea solution in organic solvent is a urea solutionin xylene, whereby nanocellulose having an amine group can be obtained.

In some embodiments, in S22, optionally, the mass ratio of the cellulose powder to the modification solution may be from 1:2.5 to 1:50, optionally from 1:5 to 1:30.

When an aqueous sulfuric acid solution is used as the modification solution, the mass ratio of the cellulose powder to the acid solution may be from 1:5 to 1:30. When an aqueous boric acid solution is used as the modification solution, the mass ratio of the cellulose powder to the acid solution may be from 1:20 to 1:50. When an aqueous phosphoric acid solution is used as the modification solution, the mass ratio of the cellulose powder to the acid solution may be from 1:5 to 1:30. When an aqueous acetic acid solution is used as the modification solution, the mass ratio of the cellulose powder to the acid solution may be from 1:5 to 1:30. When a urea solution in organic solvent is used as the modification solution, the mass ratio of the cellulose powder to the urea solution in organic solvent may be from 1:4 to 1:40.

In some embodiments, in S22, when the modification solution is an acid solution, the reaction may be carried out at a condition of not higher than 80 °C, optionally at a condition of from 30 °C to 60 °C, and the reaction time between the cellulose powder and the modification solution may be from 0.5 h to 4 h, optionally from 1 h to 3 h.

In some embodiments, in S22, when the modification solution is an alkaline solution, the reaction may be carried out under conditions of from 100 °C to 145 °C, and the reaction time of the cellulose powder and the modification solution may be from 1 h to 5 h.

In some embodiments, in S23, a grinder may be used for grinding, and a high pressure homogenizer may be used for cutting. By adjusting the grinding parameters of the grinder (e.g. number of grinding, grinding time, etc.) as well as the cutting parameters of the high-pressure homogenizer, nanocelluloses with different average diameters and/or different average lengths can be obtained.

In some embodiments, in S3, a coating machine is adopted in the coating step. In the present application, there is no particular limitation on the type of the coating machine, and for example, a commercially available coating machine can be used. The coating machine comprises a gravure roll; the gravure roll is used for transferring the slurry onto the porous substrate.

In some embodiments, in S3, transfer coating, spin spraying, dip coating, or the like may be adopted for the way of coating.

In some embodiments, the method further comprises the step of: S4, secondary coating: coating at least part of surface of the coating layer with a slurry containing a granular binder, and drying to form an adhesive layer.

The method for preparing the separator of the present application provides a coating layer through one coating process, which greatly simplifies the production process of the separator.

Some raw materials and parameters such as their amounts used in the method for preparing the separator of the present application can be determined with respect to the separator of the first aspect of the embodiments of the present application, and will not be repeatedly described herein.

Unless otherwise specified, all raw materials used in the method for preparing the separator of the present application may be commercially available.

### Secondary Battery

The third aspect of embodiments of the present application provides a secondary battery.

Secondary batteries, also known as rechargeable batteries or storage batteries, refer to batteries that can be used continuously by activating active materials through charging after the battery is discharged. Normally, a secondary battery comprises an electrode assembly and an electrolyte, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows active ions to pass through.

The present application has no particular limitation on the type of the secondary battery. For example, the secondary battery may be a lithium ion battery, a sodium ion battery, and the like. In particular, the secondary battery may be a lithium ion secondary battery.

The secondary battery of the third aspect of embodiments of the present application comprises the separator of the first aspect of embodiments of the present application or the separator prepared by the method of the second aspect of embodiments of the present application, wherein the separator is spaced between the positive electrode plate and the negative electrode plate. Optionally, the coating layer of the present application is present on at least the side of the separator close to the negative electrode plate. As a result, the secondary battery of the present application can have the combined characteristics of high energy density, high thermal safety performance and long service life.

### [Positive electrode plate]

In some embodiments, the positive electrode plate comprises a positive electrode current collector and a positive electrode film layer which is disposed on one or more surface of the positive electrode current collector and comprises a positive electrode active material. For example, the positive current collector has two opposite surfaces along the thickness direction of the positive current collector, and the positive electrode film layer is disposed on any one or both of the two opposite surfaces of the positive current collector.

When the secondary battery of the present application is a lithium ion battery, the positive electrode active material may comprise, but is not limited to, one or more of lithium transition metal oxides, lithium-containing phosphates, and their respective modified compounds thereof. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphates may include, but are not limited to, one or more of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and respective modified compounds thereof.

In some embodiments, in order to further increase the energy density of the secondary battery, the positive electrode active material for the lithium-ion battery may comprise one or more of lithium transition metal oxides having general formula LiₐNiₐCo_{c}M_{d}OₑA_{f} and modified compounds thereof. 0.8≤a≤1.2, 0.5≤b<1, 0<c<1, 0<d<1, 1≤e≤2, 0≤f≤1, M is selected from one or more of Mn, Al, Zr, Zn, Cu, Cr, Mg, Fe, V, Ti and B, and A s selected from one or more of N, F, S and Cl.

As an example, positive electrode active materials for lithium-ion batteries may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

When the secondary battery of the present application is a sodium ion battery, the positive electrode active material may include but not limited to one or more of sodium-containing transition metal oxides, polyanion materials (such as phosphate, fluorophosphate, pyrophosphate, sulfate, and the like salts), and Prussian blue materials.

As an example, a positive electrode active material for a sodium-ion battery may include one or more of NaFeO₂, NaCoO₂, NaCrO₂, NaMnO₂, NaNiO₂, NaNi_{1/2}Ti_{1/2}O₀₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials and the materials having the general formula XₚM'_{q}(PO₄)ᵣOₓY₃₋ₓ. In general formula XₚM'_{q}(PO₄)ᵣOₓY₃₋ₓ, 0<p≤4, 0<q≤2, 1≤r<3, 0≤x≤2, X is selected from one or more of H⁺, Li⁺, Na⁺, K⁺ and NH₄⁺, M' is a transition metal cation and optionally is one or more of V, Ti, Mn, Fe, Co, Ni, Cu and Zn, and Y is a halogen anion and optionally is one or more of F, Cl and Br.

In the present application, the modified compounds of the above positive electrode active materials may be doping-modified and/or surface coating-modified compounds of the positive electrode active materials.

In some embodiments, the positive electrode film layer may also optionally comprise a conductive agent for positive electrode. The present application does not particularly limit the type of conductive agent for positive electrode, and as an example, the conductive agent for positive electrode includes one or more of superconducting carbon, conductive graphite, acetylene black, carbon black, Ketjen black, carbon dots, carbon nanotubes, graphene, and carbon nanofibers. In some embodiments, the mass content of the conductive agent for positive electrode is ≤ 5%, based on the total mass of the positive electrode film layer.

In some embodiments, the positive electrode film layer may further optionally comprise a binder for positive electrode. The present application does not particularly limit the type of the binder for positive electrode, and as an example, the binder for positive electrode may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resins. In some embodiments, the mass content of the binder for positive electrode is ≤ 5%, based on the total mass of the positive electrode film layer.

In some embodiments, the positive electrode current collector may be a metal foil or a composite current collector. As an example of the metal foil, aluminum foil may be used. The composite current collector may include a base layer of polymeric material and a layer of metallic material formed on one or more surfaces of the base layer of polymeric material. As an example, the metal material may comprise one or more of aluminum, aluminum alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The positive electrode film layer is usually formed by applying a positive electrode slurry on a positive electrode current collector, drying and cold-pressing. The positive electrode slurry is usually formed by dispersing positive electrode active material, an optional conductive agent, an optional binder and any other components in a solvent and stirring them uniformly. The solvent may be N-methylpyrrolidone (NMP), but is not limited thereto.

### [Negative electrode plate]

In some embodiments, the negative electrode plate comprises a negative positive electrode current collector and a negative electrode film layer which is disposed on one or more surfaces of the negative electrode current collector and comprises a negative electrode active material. For example, the negative current collector has two opposite surfaces along the thickness direction of the negative current collector, and the positive electrode film layer is disposed on any one or both of the two opposite surfaces of the negative current collector.

The negative electrode active material can be a negative electrode active material well known in the art for secondary batteries. As an example, the negative electrode active material may include but not limited to one or more of natural graphite, artificial graphite, soft carbon, hard carbon, silicon-based material, tin-based material, and lithium titanate. The silicon-based material may include one or more of elemental silicon, silicon oxide, silicon-carbon composite, silicon-nitrogen composite, and silicon alloy. The tin-based material may include one or more of elemental tin, tin oxide, and tin alloy materials.

In some embodiments, the negative electrode film layer may also optionally comprise a conductive agent for negative electrode. The present application does not particularly limit the type of conductive agent for negative electrode, and as an example, the conductive agent for negative electrode may include one or more of superconducting carbon, conductive graphite, acetylene black, carbon black, Ketjen black, carbon dots, carbon nanotubes, graphene, and carbon nanofibers. In some embodiments, the mass content of the conductive agent for negative electrode is ≤ 5%, based on the total mass of the negative electrode film layer.

In some embodiments, the negative electrode film layer may further optionally comprises a binder for negative electrode. The present application does not particularly limit the type of the binder for negative electrode, and as an example, the binder for negative electrode may include one or more of styrenebutadiene rubber (SBR), water-soluble unsaturated resin SR-1B, aqueous acrylic resins (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, the mass content of the binder for negative electrode is ≤ 5%, based on the total mass of the negative electrode film layer.

In some embodiments, the negative electrode film layer may further optionally comprises other auxiliary agents. As examples, other auxiliary agents may include thickeners, e.g., sodium carboxymethylcellulose (CMC), PTC thermistor material, etc. In some embodiments, the mass content of the other auxiliary agents is ≤ 2%, based on the total mass of the negative electrode film layer.

In some embodiments, the negative electrode collector may be a metal foil or a composite collector. As an example of a metal foil, a copper foil may be used. The composite current collector may include a base layer of polymeric material and a layer of metallic material formed on one or more surfaces of the base layer of polymeric material. As an example, the metal material may comprise one or more of copper, copper alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The negative electrode film layer is usually formed by applying a negative electrode slurry on a negative electrode collector, drying and cold-pressing. The negative electrode slurry is typically formed by dispersing the negative active material, optional conductive agent, optional binder, other optional auxiliary agents in a solvent and stirring well. The solvent may be N-methylpyrrolidone (NMP) or deionized water, but is not limited thereto.

The negative electrode plate does not exclude additional functional layers other than the negative electrode film layer. For example, in some embodiments, the negative electrode plate described in the present application further comprises a conductive primer layer (such as composed of a conductive agent and a binder) sandwiched between the negative electrode current collector and the negative electrode film layer, and disposed on the surface of the negative electrode current collector. In some other embodiments, the negative electrode plate described in this application further comprises a protective layer covering the surface of the negative electrode film layer.

### [Electrolyte]

During the charging and discharging process of the battery, active ions are intercalated and deintercalated back and forth between the positive electrode plate and the negative electrode plate, and the electrolyte (or electrolytic solution) functions as conducting active ions between the positive electrode plate and the negative electrode plate. There is no specific limitation on the type of electrolyte in the present application, and it can be selected according to actual needs.

The electrolyte includes an electrolyte salt and a solvent. There is no specific limitation on the type of solvent and the electrolyte salt, and they can be selected according to actual needs.

When the secondary battery of the present application is a lithium ion battery, as an example, the electrolyte salt may comprise one or more of lithium hexafluorophosphate (LiPF₆), lithium tetrafluoroborate (LiBF₄), lithium perchlorate (LiClO₄), lithium hexafluoroarsenate (LiAsF₆), lithium difluorosulfimide (LiFSI), lithium bistrifluoromethanesulfonimide (LiTFSI), lithium trifluoromethanesulfonate (LiTFS), lithium difluoro(oxalate)borate (LiDFOB), bis(oxalate)borate (LiBOB), lithium difluorophosphate (LiPO₂F₂), lithium difluorobisoxalate phosphate (LiDFOP), and lithium tetrafluorooxalate phosphate (LiTFOP).

When the secondary battery of the present application is a sodium ion battery, as an example, the electrolyte salt may comprise, but is not limited to, one or more of sodium hexafluorophosphate (NaPF₆), sodium tetrafluoroborate (NaBF₄), sodium perchlorate (NaClO₄), sodium hexafluoroarsenate (NaAsF₆), sodium bisfluorosulfonimide (NaFSI), sodium bistrifluoromethanesulfonimide (NaTFSI), sodium trifluoromethanesulfonate (NaTFS), sodium difluoro(oxalate)borate (NaDFOB), sodium bis(oxalate)borate (NaBOB), sodium difluorophosphate (NaPO₂F₂), sodium difluorobisoxalate phosphate (NaDFOP) and sodium tetrafluorooxalate phosphate (NaTFOP).

As an example, the solvent may comprise, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may optionally comprise an additive. For example, the additives may comprise negative electrode film-forming additives, positive electrode film-forming additives, and additives that can improve certain performance of the battery, such as additives that improve overcharging performance of the battery, additives that improve high-temperature performance of the battery, and additives that improve low-temperature power/rating performance of the battery.

In some embodiments, the positive electrode plate, the separator, and the negative electrode plate may be fabricated into an electrode assembly by a winding process and/or a lamination process.

In some embodiments, the secondary battery may comprise an outer packaging. The outer packaging may be used to encapsulate the electrode assembly and the electrolyte.

In some embodiments, the outer packaging of the secondary battery may be a hard housing, such as a hard plastic housing, aluminum housing, steel housing, or the like. The outer packaging of the secondary battery may also be a soft pack, such as a pouch type soft pack. The material of the soft pack may be plastic, such as one or more of polypropylene (PP), polybutylene terephthalate (PBT), and polybutylene succinate (PBS).

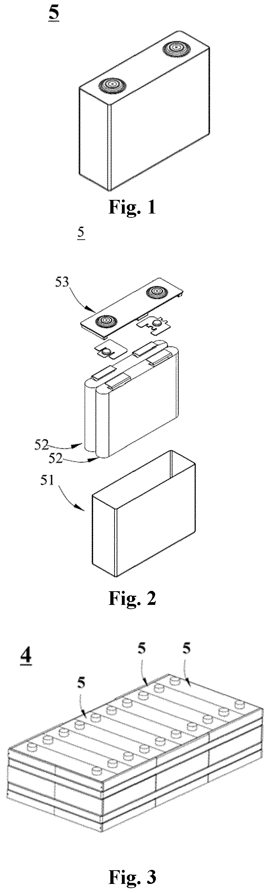

The present application does not have particular limitation on the shape of the secondary battery, which may be cylindrical, square, or other arbitrary shapes. Fig. 1 shows a battery 5 of a square structure as an example.

In some embodiments, referring to Fig. 2, the outer packaging may include a housing 51 and a cover plate 53. The housing 51 may include a bottom plate and side plates connected to the bottom plate, and the bottom plate and the side plate are combined to form an accommodating cavity. The housing 51 has an opening communicating with the accommodating cavity, and the cover plate 53 is used for covering the opening to close the accommodating cavity. The positive electrode plate, the negative electrode plate, and the separator may be stacked and/or wounded into an electrode assembly 52. The battery assembly 52 is encapsulated in the accommodating cavity. The electrolyte is infiltrated in the electrode assembly 52. The number of electrode assemblies 52 included in the secondary battery 5 may be one or multiple, and may be adjusted according to requirements.

The preparation method of the secondary battery of the present application is well known. In some embodiments, a positive electrode plate, a separator, a negative electrode plate, and electrolytic solution can be assembled to form a secondary battery. As an example, the positive electrode plate, the separator, and the negative electrode plate can be formed into an electrode assembly by a winding process and/or a laminating process; the electrode assembly is placed in an outer packaging and dried, followed by injection with the electrolyte; after the processes including vacuum encapsulation, steady standing, chemical formation, and shaping, a secondary battery is obtained.

In some embodiments, the secondary battery of the present application can be assembled into a battery module, and the number of secondary batteries contained in the battery module can be multiple, and the specific number can be adjusted according to the application and capacity of the battery module.

Fig. 3 is a schematic diagram of a battery module 4 as an example. Referring to Fig. 3, in the battery module 4, a plurality of secondary batteries 5 may be disposed sequentially in the length direction of the battery module 4. Apparently, they may also be disposed in any other manner. Furthermore, the plurality of secondary batteries 5 may be fixed by fasteners.

Optionally, the battery module 4 may further include a housing having an accommodating space in which a plurality of secondary batteries 5 are accommodated.

In some embodiments, the above-mentioned battery module may also be assembled into a battery pack, and the number of battery modules contained in the battery pack can be adjusted according to the application and capacity of the battery pack.

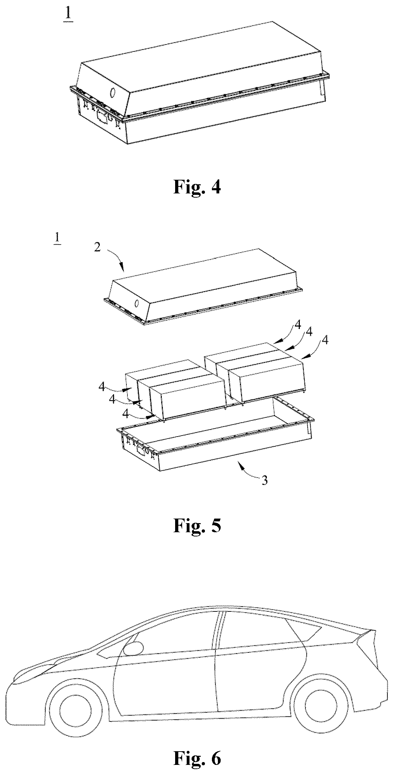

Figs. 4 and 5 are schematic diagrams of battery pack 1 as an example. As shown in Figs. 4 and 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for receiving the battery modules 4. A plurality of battery modules 4 can be disposed in the battery case in any manner.

### Electrical device

The fourth aspect of embodiments of the present application provides an electrical device comprising one or more of the secondary battery, battery module, and battery pack of the present application. The secondary battery, battery module or battery pack can be used as a power source of the electrical device, and can also be used as an energy storage unit of the electrical device. The electrical device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

The electrical device may comprise the secondary battery, the battery module or the battery pack selected according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, etc. The electric device is generally required to be light and thin, and a secondary battery can be used as a power source.

### Examples

The following examples are intended to describe the present application more specifically, merely for the purpose of illustration. Various modifications and variations within the scope of the present application are apparent to those skilled in the related art. Unless otherwise stated, all parts, percentages, and ratios reported in the following examples are based on mass, and all reagents used in the examples are commercially available or synthesized by conventional methods, and can be directly obtained without further treatment, and the instruments used in the examples are commercially available.

### Preparation of nanocellulose C1

### Preparation of cellulose powder

After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%.

### Esterification of cellulose

1 kg of the obtained Gossypium cellulose powder was mixed with 30 kg of 60 wt.% sulfuric acid aqueous solution, and the reaction was carried out at 60°C for 1.5 h. After the reaction was completed, by washing with water (3 times of water washing), filtering, and removing acid and impurities, the cellulose nanowhiskers with sulfonic acid modifying groups were obtained.

### Neutralization of cellulose

The pH of cellulose nanowhiskers with sulfonic acid modifying groups was adjusted to neutral with 10 wt.% aqueous NaOH solution, and then dispersed with a grinder at high speed for 2.5 h. The grinding were carried out for 2 times, and then a high pressure homogenizer was used for nanoscale cutting, to obtain the nanocellulose C1 with sulfonic acid modifying groups having an average length of 475 nm and an average diameter of 25 nm, and the molar ratio of sulfonic acid groups to hydroxyl groups of 5:3.

### Preparation of nanocellulose C2 to nanocellulose C10

Nanocellulose C2 to nanocellulose C10 were prepared in a similar manner to nanocellulose C1, with the differences detailed in Table 1. In the preparation, nanocelluloses with different average diameters and/or different average lengths can be obtained by adjusting the parameters of the grinder as well as the cutting parameters of the high-pressure homogenizer.

### Preparation of nanocellulose C11

### Preparation of cellulose powder

After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%. The obtained Gossypium cellulose powder was mixed with 20 wt.% aqueous NaOH solution at 10°C, stirred for 2 h, filtered, and washed with water twice to obtain alkali cellulose powder.

### Esterification of cellulose

50 g of the obtained alkali cellulose powder and 200 g of urea were placed in a three-port reactor with an oil-water separator. After the urea was dissolved, 5 g of xylene was added, and the temperature was raised to 137 °C under stirring. The reaction was terminated after 4 hours, followed by water washing (3 times of water washing), filtering and drying, to obtain cellulose carbamate.

### Neutralization of cellulose

The obtained cellulose carbamate was dissolved in 5 wt.% aqueous NaOH solution to obtain a homogeneous cellulose carbamate solution; and the cellulose carbamate solution was then dispersed with a grinder at high speed for 2.5 h. The grinding were carried out for 2 times, and then a high pressure homogenizer was used for nanoscale cutting, to obtain the nanocellulose with amine modifying groups having an average length of 475 nm and an average diameter of 25 nm, and the molar ratio of amine groups to hydroxyl groups of 4:3.

The molar ratio of modifying groups to hydroxyl groups can be measured by the following method: according to the phthalic anhydride method in GB/T 12008.3-2009, the hydroxyl values of raw material cellulose and modified nanocellulose (milligrams of potassium hydroxide equivalent to the hydroxyl content per gram of sample) were respectively tested, and the obtained numerical unit was mg KOH/g, which was converted into mmol/g as the hydroxyl content. The content of the modifying group (i.e. the content of the modified hydroxyl group) can be obtained by subtracting the hydroxyl content of the modified nanocellulose from the hydroxyl content of raw material cellulose, and thus the molar ratio of the modifying group to the hydroxyl group can be calculated.

### Preparation of nanocellulose C12 and nanocellulose C13

Unmodified nanocellulose with a product model of CNWS-50 purchased from Zhongke Leiming (Beijing) Technology Co., Ltd. was used, and can be further processed using a grinder and/or a high-pressure homogenizer to obtain nanocellulose with different average diameters and/or different average lengths. See Table 1 for details.

**Table 1**

| No. | Acid or alkali species | Concentration of modification solution | Reaction time (h) | Number of grinding | Modifying group | Molar ratio of modifying group to hydroxyl group | Average diameter (nm) | Average length (nm) | Aspect ratio |
|---|---|---|---|---|---|---|---|---|---|
| C1 | H₂SO₄ | 60 wt.% | 1.5 | 2 | Sulfonic acid group | 5:3 | 25 | 475 | 19.0 |
| C2 | H₂SO₄ | 40 wt.% | 0.5 | 2 | Sulfonic acid group | 1:5 | 50 | 475 | 9.5 |
| C3 | H₂SO₄ | 40 wt.% | 1.0 | 2 | Sulfonic acid group | 1:4 | 40 | 475 | 11.9 |
| C4 | H₂SO₄ | 40 wt.% | 1.2 | 2 | Sulfonic acid group | 2:3 | 35 | 475 | 13.6 |
| C5 | H₂SO₄ | 80 wt.% | 2.0 | 2 | Sulfonic acid group | 7:3 | 23 | 475 | 20.7 |
| C6 | H₂SO₄ | 80 wt.% | 3.0 | 2 | Sulfonic acid group | 4:1 | 20 | 475 | 23.8 |
| C7 | H₂SO₄ | 80 wt.% | 4.0 | 4 | Sulfonic acid group | 5:1 | 15 | 475 | 31.7 |
| C8 | Acetic acid | 60 wt.% | 1.5 | 2 | Carboxylic acid group | 6:3 | 25 | 475 | 19.0 |
| C9 | H₃PO₄ | 70 wt.% | 3.0 | 2 | Boric acid group | 4:3 | 25 | 475 | 19.0 |
| C10 | H₃BO₃ | 7 wt.% | 3.0 | 2 | Phosphoric acid group | 4:3 | 25 | 475 | 19.0 |
| C11 | Urea | / | 4.0 | 2 | Amine group | 4:3 | 25 | 475 | 19.0 |
| C12 | / | / | / | / | / | / | 25 | 475 | 19.0 |
| C13 | / | / | / | / | / | / | 12 | 240 | 20.0 |

### Example 1

### (1) Preparation of separator

S1, providing a PE porous substrate: having a thickness of 5 µm and a surface tension of 25 mN/m.

S2, formulating a coating slurry: mixing evenly the above prepared nanocellulose C1, alumina (with secondary particle morphology, average particle size Dv50 of 160 nm) as a filler, and an aqueous solution type polyacrylic acid as a binder at a mass ratio of 15:84.1:0.9 in an appropriate amount of deionized water as solvent to obtain a coating slurry with a solid content of 35 wt.% and a viscosity of 854 mPa·s.

S3, coating: coating both surfaces of the PE porous substrate with the formulated coating slurry using a coating machine, and a separator was obtained by drying and slitting steps. The coating layer on one side of PE porous substrate had a thickness of 0.8 µm.

### (2) Preparation of positive electrode plate

The positive electrode active material LiNi_{0.8}Co_{0.1}Mn_{0.1}O₂ (NCM811), carbon black (Super P) as conductive agent, and polyvinylidene fluoride (PVDF) as binder were uniformly mixed at a mass ratio of 96.2:2.7:1.1 in an appropriate amount of solvent N-methylpyrrolidone (NMP) to obtain a positive electrode slurry; the positive electrode slurry was applied on an aluminum foil as positive electrode collector, and then dried and cold-pressed, slitted, and cut, to give the positive electrode plate. The positive electrode plate had an areal density of 0.207 mg/mm² and a compacted density of 3.5 g/cm³.

### (3) Preparation of negative electrode plate

Artificial graphite as negative electrode active material, carbon black (Super P) as conductive agent, styrene butadiene rubber (SBR) as binder, and carboxymethyl cellulose sodium (CMC) were mixed at a mass ratio of 96.4:0.7:1.8:1.1 in a suitable solvent deionized water to obtain a negative electrode slurry; the negative electrode slurry was applied onto a copper foil as negative electrode current collector; and after processes including drying, cold-pressing, slitting and cutting, the negative electrode plate was obtained. The negative electrode plate had an areal density of 0.126 mg/mm² and a compacted density of 1.7 g/cm³.

### (4) Preparation of electrolyte

Ethylene carbonate (EC) and ethyl methyl carbonate (EMC) at a volume ratio of 30:70 were mixed to obtain an organic solvent, and then a fully dried LiPF₆ was dissolved in the above organic solvent, to prepare an electrolyte with a concentration of 1 mol/L.

### (5) Preparation of secondary battery

The positive electrode plate, the separator, and the negative electrode plate were stacked and wound in sequence to obtain an electrode assembly; the electrode assembly was placed in a outer packaging and dried, followed by injection with the electrolyte; after the processes including vacuum encapsulation, standing, chemical formation, and shaping, a secondary battery was obtained.

### Examples 2-6

The secondary batteries were prepared by a method similar to that of Example 3, except that the surface tensions of the porous substrates were different in the preparation of the separator, and the specific parameters were detailed in Table 2. Porous substrates with different surface tensions may be obtained through commercial purchase, and the surface of the porous substrate may also be treated with an oxidizing agent or irradiated with ultraviolet light to impart the desirable surface tension.

### Examples 7-17

The secondary batteries were prepared by a method similar to that of Example 3, except that the types of nanocellulose used in the preparation of the separators were different, and the specific parameters were detailed in Tables 1 and 2.

### Examples 18-20

The secondary batteries were prepared by a method similar to that of Example 3, except that the amounts of nanocellulose and filler added in the preparation of the separators were different, and the specific parameters were detailed in Table 2.

### Examples 21-22

The secondary batteries were prepared by a method similar to that of Example 3, except that in the preparation of the separator fillers, a mixture of alumina with a secondary particle morphology (having an average particle size Dv50 of 160 nm) and alumina with primary particle morphology (having an average particle size Dv50 of 400 nm) was used as the filler, with a mass ratio of 90: 10 in Example 21 and 70:30 in Example 22, respectively, and the specific amounts were detailed in Table 2.

### Comparative Example 1

The secondary battery was prepared by a method similar to that of Example 3, except that the parameters for preparing the separators were different, and the surface tension of PE porous substrate was 20 mN/m, and unmodified nanocellulose of No. C12 was used as nanocellulose, and alumina with primary particle morphology having an average particle size Dv50 of 1000 nm was used as filler.

### Comparative Example 2

The secondary battery was prepared by a method similar to that of Example 3, except that the surface tension of the PE porous substrate was 20 mN/m in the preparation of the separator, and no filler was added in the coating slurry.

### Comparative Example 3

The secondary battery was prepared by a method similar to that of Example 3, except that the surface tension of PE porous substrate was 20 mN/m in the preparation of the separator, and alumina with primary particle morphology having an average particle size Dv50 of 400 nm was used as filler.

### Comparative Example 4

The secondary battery was prepared by a method similar to that of Example 3, except that the surface tension of PE porous substrate was 20 mN/m in the preparation of the separator.

**Table 2**

| No. | Nanocellulose | | | | | | Filler | | | | Viscosity (mPa•s) of coating slurry |
|---|---|---|---|---|---|---|---|---|---|---|---|
| | Types | Modifying group | Molar ratio of modifying group to hydroxyl group | Average diameter (nm) | Average length (nm) | wt.% | Types | Dv50 (nm) | Morphology | wt.% | |
| Example 1 | C1 | Sulfonic acid group | 5:3 | 25 | 475 | 15 | Alumina | 160 | Secondary particle | 84.1 | 854 |
| Example 2 | C1 | Sulfonic acid group | 5:3 | 25 | 475 | 15 | Alumina | 160 | Secondary particle | 84.1 | 854 |
| Example 3 | C1 | Sulfonic acid group | 5:3 | 25 | 475 | 15 | Alumina | 160 | Secondary particle | 84.1 | 854 |
| Example 4 | C1 | Sulfonic acid group | 5:3 | 25 | 475 | 15 | Alumina | 160 | Secondary particle | 84.1 | 854 |
| Example 5 | C1 | Sulfonic acid group | 5:3 | 25 | 475 | 15 | Alumina | 160 | Secondary particle | 84.1 | 854 |
| Example 6 | C1 | Sulfonic acid group | 5:3 | 25 | 475 | 15 | Alumina | 160 | Secondary particle | 84.1 | 854 |
| Example 7 | C2 | Sulfonic acid group | 1:5 | 50 | 475 | 15 | Alumina | 160 | Secondary particle | 84.1 | 723 |
| Example 8 | C3 | Sulfonic acid group | 1:4 | 40 | 475 | 15 | Alumina | 160 | Secondary particle | 84.1 | 757 |
| Example 9 | C4 | Sulfonic acid group | 2:3 | 35 | 475 | 15 | Alumina | 160 | Secondary particle | 84.1 | 788 |
| Example 10 | C5 | Sulfonic acid group | 7:3 | 23 | 475 | 15 | Alumina | 160 | Secondary particle | 84.1 | 890 |
| Example 11 | C6 | Sulfonic acid group | 4:1 | 20 | 475 | 15 | Alumina | 160 | Secondary particle | 84.1 | 982 |
| Example 12 | C7 | Sulfonic acid group | 5:1 | 15 | 475 | 15 | Alumina | 160 | Secondary particle | 84.1 | 1081 |
| Example 13 | C8 | Carboxylic acid group | 6:3 | 25 | 475 | 15 | Alumina | 160 | Secondary particle | 84.1 | 826 |
| Example 14 | C9 | Boric acid group | 4:3 | 25 | 475 | 15 | Alumina | 160 | Secondary particle | 84.1 | 758 |
| Example 15 | C10 | Phosphoric acid group | 4:3 | 25 | 475 | 15 | Alumina | 160 | Secondary particle | 84.1 | 728 |
| Example 16 | C11 | Amine group | 4:3 | 25 | 475 | 15 | Alumina | 160 | Secondary particle | 84.1 | 733 |
| Example 17 | C12 | / | / | 25 | 475 | 15 | Alumina | 160 | Secondary particle | 84.1 | 628 |
| Example 18 | C1 | Sulfonic acid group | 5:3 | 25 | 475 | 8 | Alumina | 160 | Secondary particle | 91.1 | 728 |
| Example 19 | C1 | Sulfonic acid group | 5:3 | 25 | 475 | 25 | Alumina | 160 | Secondary particle | 74.1 | 886 |
| Example 20 | C1 | Sulfonic acid group | 5:3 | 25 | 475 | 40 | Alumina | 160 | Secondary particle | 59.1 | 977 |
| Example 21 | C1 | Sulfonic acid group | 5:3 | 25 | 475 | 15 | Alumina | 160+ 400 | 90% secondary particles + 10% primary particles | 84.1 | 811 |
| Example 22 | C1 | Sulfonic acid group | 5:3 | 25 | 475 | 15 | Alumina | 160+ 400 | 70% secondary particles + +30% primary particles | 84.1 | 780 |
| Comparative Example 1 | C13 | / | / | 12 | 240 | 15 | Alumina | 1000 | Primary particle | 80 | 666 |
| Comparative Example 2 | C1 | Sulfonic acid group | 5:3 | 25 | 475 | 95 | / | / | / | / | 1077 |
| Comparative Example 3 | C1 | Sulfonic acid group | 5:3 | 25 | 475 | 15 | Alumina | 400 | Primary particle | 84.1 | 690 |
| Comparative Example 4 | C1 | Sulfonic acid group | 5:3 | 25 | 475 | 15 | Alumina | 160 | Secondary particle | 84.1 | 788 |

### Test section

### (1) Viscosity test of coating slurry

At 25°C, the viscosity of coating slurry is tested by using a rotational viscometer. AMETEK rotational viscometer may be used as test instrument and the rotation speed may be 12 r/min.

### (2) Surface tension of coating layer and porous substrate

At 25 °C, a dyne pen may be used for testing.

### (3) Bonding strength test between coating layer and porous substrate

At 25°C, the bonding strength between the coating layer and the porous substrate in the separator is tested using a tensile tester. The sample size of the separator may be 100 mm × 15 mm, the peeling speed of the separator may be 50 mm/min, the peeling angle may be 180°, and GOTECH tensile machine may be used as the tensile tester, and the starting fixture spacing may be 40 mm. GB/T 2792-2014 may be referred to as test standard.

### (4) Thermal shrinkage rate test of separator

Sample preparation: The separator prepared above was punched into samples with a width of 50 mm and a length of 100 mm using a punching machine; and five parallel samples were placed on A4 paper and fixed; and then the A4 paper loaded with the samples was placed on corrugated paper with a thickness of from 1 mm to 5 mm.

Sample test: a blast oven was set to the temperature of 150 °C; After the temperature reached the set temperature and stabilized for 30 minutes, the A4 paper placed on the corrugated paper was placed into the blast oven, following by starting timing until the set time (1 h in this application) was reached; the length and width of the separator were measured, and the values were marked as a and b, respectively.

Calculation of thermal shrinkage rate: machine direction (MD) heat shrinkage rate = [(100-a)/100] × 100%, transverse direction (TD) thermal shrinkage rate = [(50-b)/50] × 100%, and the average value of five replicate samples was taken as the test result.

### (5) Air permeability test of separator

Time required for 100 mL of air to pass through the separator at 25°C was tested, and the average value of 5 parallel samples was taken as the test result. The test instrument may be the Kumagai KRK Wangyan air permeability tester.

### (6) Test of cycle performance of secondary battery

At 25 °C, the secondary battery was charged to 4.2 V with a constant current of 1 C, continued to charge at constant voltage until the current was ≤ 0.05 C, at which time the secondary battery was in a fully charged state and the charge capacity was recorded, i.e. the charge capacity after the first cycle; After the secondary battery was allowed to stand for 5 min, it was discharged to 2.8 V with a constant current of 1 C, which was a cyclic charge and discharge process and at which time the discharge capacity was recorded, i.e. the discharge capacity after the first cycle. The secondary battery was subjected to the above cyclic charge-discharge process, and the discharge capacity after each cycle was recorded. Capacity retention ratio (%) of secondary battery at 25 °C after 500 cycles = discharge capacity after 500 cycles/discharge capacity after the first cycle × 100%.

### (7) Hot box testing of secondary battery

The secondary battery was charged with a constant current of 1 C to 4.2 V at 25 °C, and continued to charge with the constant voltage until the current was ≤ 0.05 C, and allowed to stand for 5 minutes; then secondary battery with a fixture was tested in a DHG-9070A DHG series high-temperature oven, and raised from room temperature to 100 ± 2 °C at a rate of 5 °C/min, and held for 30 minutes; then, the temperature was raised at a heating rate of 5 °C/min. Every time the temperature was raised by 5 °C, the temperature was kept for 30 minutes until the secondary battery failed. During the temperature rise process, the surface temperature change of the secondary battery was monitored. When the temperature starts to rise sharply, the corresponding oven temperature was recorded as the hot box failure temperature of the secondary battery. The higher hot box failure temperature of a secondary battery means the better thermal safety performance of the secondary battery.

**Table 3**

| No. | δ1 (mN/m) | δ2 (mN/m) | δ1/δ2 | Bonding strength (N/m) between coating layer and porous substrate | Thermal shrinkage rate at 150 °C/1h (%) | | Air permeability (s/100 mL) | Battery performance | |
|---|---|---|---|---|---|---|---|---|---|
| | | | | | MD | TD | | Capacity retention ratio after 500 cycles at 25°C (%) | Hot box failure temperature (°C) |
| Example 1 | 25 | 37 | 0.68 | 19.1 | 2.62 | 2.93 | 168.9 | 92.9 | 145.8 |
| Example 2 | 27 | 37 | 0.73 | 22.5 | 2.49 | 2.76 | 173.3 | 92.5 | 147.3 |
| Example 3 | 31 | 37 | 0.84 | 27.1 | 2.30 | 2.55 | 180.5 | 92.0 | 149.2 |
| Example 4 | 35 | 37 | 0.95 | 29.7 | 2.23 | 2.46 | 189.7 | 91.8 | 152.7 |
| Example 5 | 40 | 37 | 1.08 | 31.5 | 2.04 | 2.28 | 192.8 | 91.6 | 153.2 |
| Example 6 | 45 | 37 | 1.22 | 32.1 | 1.84 | 2.09 | 208.2 | 91.5 | 154.0 |
| Example 7 | 31 | 33 | 0.94 | 18.0 | 2.73 | 2.99 | 165.5 | 93.0 | 145.1 |
| Example 8 | 31 | 34 | 0.91 | 21.0 | 2.52 | 2.83 | 170.4 | 92.8 | 146.3 |
| Example 9 | 31 | 35 | 0.89 | 24.3 | 2.44 | 2.68 | 177.6 | 92.4 | 148.0 |
| Example 10 | 31 | 39 | 0.79 | 28.2 | 2.27 | 2.50 | 184.5 | 91.9 | 151.4 |
| Example 11 | 31 | 42 | 0.74 | 29.4 | 2.25 | 2.47 | 188.9 | 91.8 | 151.9 |
| Example 12 | 31 | 43 | 0.72 | 29.6 | 2.23 | 2.44 | 190.0 | 91.7 | 152.5 |
| Example 13 | 31 | 36 | 0.86 | 25.6 | 2.33 | 2.61 | 178.5 | 92.2 | 148.8 |
| Example 14 | 31 | 34 | 0.91 | 21.7 | 2.48 | 2.75 | 171.9 | 92.5 | 147.2 |
| Example 15 | 31 | 33 | 0.94 | 19.6 | 2.68 | 2.85 | 166.3 | 92.9 | 145.9 |
| Example 16 | 31 | 33 | 0.94 | 19.9 | 2.62 | 2.83 | 166.4 | 92.8 | 146.0 |
| Example 17 | 31 | 30 | 1.03 | 16.8 | 3.58 | 3.86 | 160.8 | 93.0 | 144.4 |
| Example 18 | 31 | 33 | 0.94 | 19.7 | 2.63 | 2.82 | 166.3 | 92.7 | 146.2 |
| Example 19 | 31 | 39 | 0.79 | 28.1 | 2.28 | 2.51 | 184.7 | 91.9 | 151.2 |
| Example 20 | 31 | 42 | 0.74 | 29.4 | 2.24 | 2.48 | 189.1 | 91.8 | 150.0 |
| Example 21 | 31 | 36 | 0.86 | 25.5 | 2.34 | 2.64 | 178.3 | 92.2 | 148.6 |
| Example 22 | 31 | 35 | 0.89 | 24.5 | 2.43 | 2.62 | 178.2 | 92.4 | 147.8 |
| Comparative Example 1 | 20 | 31 | 0.65 | 15.3 | 9.21 | 9.69 | 162.6 | 82.3 | 142.9 |
| Comparative Example 2 | 20 | 43 | 0.47 | 12.1 | 15.80 | 16.21 | 237.7 | 80.4 | 140.1 |
| Comparative Example 3 | 20 | 32 | 0.63 | 15.0 | 5.82 | 6.44 | 165.1 | 91.2 | 143.5 |
| Comparative Example 4 | 20 | 37 | 0.54 | 13.5 | 6.23 | 6.58 | 195.1 | 91.0 | 143.7 |

As can be seen from Table 3, in Examples 1-22, coating layers comprising nanocellulose were provided on both surfaces of porous substrates of the separators, and the surface tension δ1 mN/m of the porous substrate and the surface tension δ2 mN/m of the coating layer were reasonably controlled so as to satisfy δ1/δ2 ≥ 0. 68, optionally satisfy 0.68 ≤ δ1/δ2 ≤ 1.8, more optionally satisfy 0.7 ≤ δ1/δ2 ≤ 1.2, which enables the separators to have the combined characteristics of low heat shrinkage rate, high bonding strength and high air permeability, and can further enables the secondary batteries to have the combined characteristics of high thermal safety performance and good cycle performance.

Alumina used in the coating layer of Comparative Example 1 had primary particle morphology, in which alumina and nanocellulose cannot form an integrated overlap effect, thereby resulting in very poor heat resistance of the separator and the thermal safety performance of the secondary battery. In addition, a relatively high amount of binder was still required in the preparation of coating slurry in Comparative Example 1. However, when the relatively high amount of binder was used, pore clogging occurred and thus resulted in relatively poor cycle performance of the secondary battery.

Alumina was not used in the coating layer of Comparative Example 2, in which the viscosity of the nanocellulose solution was relatively high, resulting in poor air permeability of the coating layer and poor cycle performance of the secondary battery; meanwhile, the heat resistance of the separator and the thermal safety performance of the secondary battery were also relatively poor.

In Comparative Examples 3 and 4, the ratio of surface tension of used porous substrate to surface tension of prepared coating layer were less than 0.68, in which large areas of holiday (missing coating) problem were present during the application of the coating slurries, thereby leading to poor bonding strength and poor heat resistance of the separators, and also poor thermal safety performance of the secondary batteries.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application.

## Claims

1. A separator, comprising a porous substrate and a coating layer disposed on one or more surfaces of the porous substrate, wherein the coating layer comprises nanocellulose, and the porous substrate has a surface tension of δ1 mN/m, the coating layer has a surface tension of δ2 mN/m, and the separator satisfies δ1/δ2 ≥ 0.68.

2. The separator according to claim 1, wherein
0.68 ≤ δ1/δ2 ≤ 1.8, optionally, 0.7 ≤ δ1/δ2 ≤ 1.2; and/or,
δ1 ≥ 23, optionally, 23 ≤ δ1 ≤ 45; and/or,
25 ≤ δ2 ≤ 50, optionally, 30 ≤ δ2 ≤ 45.

3. The separator according to claim 1 or 2, wherein the nanocellulose comprises one or more of an unmodified nanocellulose and a modified nanocellulose, and optionally is a modified nanocellulose,
optionally, the modified nanocellulose comprises a modifying group, and the modifying group comprises one or more of an amino group, a carboxylic acid group, an aldehyde group, a sulfonic acid group, a boric acid group, and a phosphoric acid group, and more optionally comprises one or more of a sulfonic acid group, a boric acid group, and a phosphoric acid group; and/or,
optionally, the modified nanocellulose comprises a hydroxyl group and a modifying group, and a molar ratio of the modifying group to the hydroxyl group is from 1:4 to 4:1, more optionally from 2:3 to 7:3.

4. The separator according to any one of claims 1 to 3, wherein the nanocellulose satisfies one or more of the following conditions (1) to (3):
(1) the nanocellulose has an average diameter of ≤ 40 nm, optionally from 10 nm to 35 nm;
(2) the nanocellulose has an average length of from 100 nm to 600 nm, optionally from 200 nm to 500 nm;
(3) the nanocellulose has an aspect ratio of from 5 to 60, optionally from 15 to 30.

5. The separator according to any one of claims 1 to 4, wherein the nanocellulose in the coating layer is present in an amount of ≥ 8 wt.%, optionally from 10 wt.% to 25 wt.%, based on the total weight of the coating layer.

6. The separator according to any one of claims 1 to 5, wherein the coating layer further comprises a filler, and the filler comprises one or more selected from inorganic particles and organic particles.

7. The separator according to claim 6, wherein the filler in the coating layer is present in an amount of ≥ 60 wt.%, optionally from 65 wt.% to 90 wt.%, based on the total weight of the coating layer.

8. The separator according to claim 6 or 7, wherein the filler comprises primary particles, secondary particles, and the combination thereof, and optionally the filler at least comprises secondary particles;
optionally, the filler with primary particle morphology has an average particle size Dv50 of from 100 nm to 800 nm, more optionally from 200 nm to 400 nm;
optionally, the filler with secondary particle morphology has an average particle size Dv50 of ≤ 200 nm, optionally from 50 nm to 200 nm.

9. The separator according to any one of claims 6 to 8, wherein the filler comprises inorganic particles with primary particle morphology, inorganic particles with secondary particle morphology, and the combination thereof, and optionally the filler at least comprises inorganic particles with secondary particle morphology;
optionally, the inorganic particles with primary particle morphology have a crystal form including one or more of α crystal form and γ crystal form, and more optionally have a crystal form including α crystal form;
optionally, the inorganic particles with secondary particle morphology have a crystal form including two or more of α crystal form, θ crystal form, γ crystal form and η crystal form, more optionally have a crystal form including two or more of α crystal form, θ crystal form, and γ crystal form.

10. The separator according to claims 1 to 9, wherein the coating layer further comprises a non-granular binder;
optionally, the non-granular binder comprises an aqueous solution-type binder;
optionally, the non-granular binder in the coating layer is present in an amount of < 1 wt.%, based on the total weight of the coating layer

11. The separator according to any one of claims 1 to 10, wherein the coating layer does not comprise a wetting agent.

12. The separator according to any one of claims 1 to 11, wherein,
the porous substrate has a thickness of ≤ 6 µm, optionally from 3 µm to 5 nm; and/or,
the coating layer has an areal density of from 0.6 g/m² to 1.5 g/m², optionally from 0.8 g/m² to 1.1 g/m²; and/or,
the coating layer has a thickness of ≤ 1.5 µm, optionally from 0.5 µm to 0.8 nm.

13. The separator according to any one of claims 1 to 12, wherein the separator further comprises an adhesive layer, the adhesive layer is disposed on at least part of surface of the coating layer, and the adhesive layer comprises a granular binder, and optionally, the granular binder comprises one or more of a homopolymer or copolymer of acrylate monomer, a homopolymer or copolymer of acrylic monomer, a homopolymer or copolymer of fluorine-containing olefin monomer.

14. The separator according to any one of claims 1 to 13, wherein the separator satisfies one or more of the following conditions (1) to (8):
(1) bonding strength between the coating layer and the porous substrate is from 16 N/m to 40 N/m, optionally from 20 N/m to 35 N/m;
(2) the separator has a longitudinal thermal shrinkage rate at 150°C for 1 h of ≤ 5%, optionally from 0.5% to 3%;
(3) the separator has a lateral thermal shrinkage rate at 150°C for 1 h of ≤ 5%, optionally from 0.5% to 3%;
(4) the separator has a longitudinal tensile strength of ≥ 2000 kg/cm², optionally from 2500 kg/m² to 4500 kg/m²;
(5) the separator has a lateral tensile strength of ≥ 2000 kg/m², optionally from 2500 kg/m² to 4500 kg/m²;
(6) the separator has a wetting length of ≥ 30 mm, optionally from 30 mm to 80 mm;
(7) the separator has a wetting speed of ≥ 3 mm/s, optionally from 3 mm/s to 10 mm/s; and
(8) the separator has an air permeability of ≤ 300 s/100 mL, optionally from 100 s/100 mL to 230 s/100 mL.

15. A method for preparing the separator according to any one of claims 1 to 14, comprising the following steps: S1, providing a porous substrate; S2, providing a coating slurry comprising nanocellulose; S3, coating one or more surfaces of the porous substrate with the coating slurry to form a coating layer, and drying to obtain a separator, wherein the separator comprises a porous substrate and a coating layer disposed on one or more surfaces of the porous substrate, and the porous substrate has a surface tension of δ1 mN/m, the coating layer has a surface tension of δ2 mN/m, and the separator satisfies δ1/δ2 ≥ 0.68.

16. The method according to claim 15, wherein the coating slurry further comprises a filler.

17. The method according to claim 15 or 16, wherein the coating slurry has a surface tension of from 18 mN/m to 52 mN/m.

18. The method according to any one of claims 15 to 17, further comprising the step of: S4, secondary coating: coating at least part of surface of the coating layer with a slurry containing a granular binder, and drying to form an adhesive layer.

19. A secondary battery, comprising the separator according to any one of claims 1 to 14 or the separator prepared by the method according to any one of claims 15 to 18.

20. An electrical device, comprising the secondary battery according to claim 19.
